# FASCICULE DE BREVET EUROPEEN

(11) **EP 4 543 750 B1**
(45) Date de publication et mention de la délivrance du brevet: **29.04.2026**
(21) Numéro de dépôt: 23744851.9
(22) Date de dépôt: 22.06.2023
(51) Int. Cl.: B64C 11/38, F16H 25/22, F16H 25/24, F01D 7/00, B64C 11/06, B64C 11/40, F01D 5/30, F04D 29/36, F16H 25/20

(54) **MECANISME DE CHANGEMENT DE PAS AVEC VERIN ENTOURANT UN PALIER DE TRANSFERT DE FLUIDE**
BLATTVERSTELLUNGMECHANISMUS MIT EINEM HYDRAULISCHEN AKTUATOR, DER EIN EINE FLÜSSIGKEIT ÜBERTRAGENDES LAGER UMGIBT
PITCH CHANGE MECHANISM COMPRISING A HYDRAULIC ACTUATOR SURROUNDING A FLUID TRANSFER BEARING

(30) Priorité: 22.06.2022 FR 2206140; 28.10.2022 FR 2211295
(43) Date de publication de la demande: 30.04.2025
(73) Titulaire: SAFRAN AIRCRAFT ENGINES, 75015 Paris (FR)
(72) Inventeur: PERDRIGEON, Christophe Marcel Lucien, 77550 MOISSY-CRAMAYEL (FR); COTTET, Clément, 77550 MOISSY-CRAMAYEL (FR); RODA, Jean Charles Olivier, 77550 MOISSY-CRAMAYEL (FR); SERVANT, Régis Eugène Henri, 77550 MOISSY-CRAMAYEL (FR)
(74) Mandataire: Regimbeau
(86) Numéro de dépôt international: PCT/FR2023/050943
(87) Numéro de publication internationale: WO 2023/247906

(56) Documents cités:
- EP-A1- 3 138 771
- EP-B1- 0 275 504
- EP-B1- 1 832 509
- EP-B1- 2 906 834
- FR-B1- 3 098 268
- FR-B1- 3 098 268
- US-A- 4 753 572
- US-A1- 2010 150 719

## Description

### DOMAINE DE L'INVENTION

La présente invention concerne le domaine général des turbomachines équipées d'au moins une soufflante dotée d'aubes à calage variable, et plus particulièrement à la commande de l'orientation des pales de soufflante de ces turbomachines.

Un domaine privilégié d'application de l'invention est celui des turboréacteurs à soufflante non carénée (mieux connus sous les appellations anglaises « propfan », « open fan », « open rotor » et « unducted fan »). Toutefois, l'invention s'applique également aux turbopropulseurs à une ou plusieurs hélices propulsives.

### ARRIERE-PLAN TECHNOLOGIQUE

Une des voies actuellement explorées pour améliorer la consommation spécifique des moteurs d'avions civils est constituée par la mise au point de turboréacteurs à soufflante non carénée, tels que celui décrit dans le document FR 2 941 493. Ces turboréacteurs comportent un générateur de gaz de turbomoteur classique, dont un ou plusieurs étages de turbine entraînent un ou plusieurs rotor(s) de soufflante non carénée s'étendant à l'extérieur de la nacelle du moteur, le plus souvent par l'intermédiaire d'un réducteur permettant au rotor de soufflante de tourner à une vitesse inférieure à celle du ou des étage(s) de turbine.

Les aubes de ce ou de ces rotor(s) sont, comme dans le cas des turbopropulseurs classiques, à calage variable, c'est à dire que la position angulaire de ces aubes (appelée angle de calage) peut être modifiée au cours du vol. Pour rappel, l'angle de calage d'une aube correspond à l'angle, dans un plan orthogonal à l'axe de pivotement de l'aube, entre l'axe de rotation de la soufflante et la corde de l'aube à 75% du rayon de la soufflante. Il peut varier d'une valeur égale à 90°, correspondant à une position dite « voile » ou « à plat » de l'aube, à une valeur égale à 0° , correspondant à une position dite « drapeau » de l'aube. Il peut également prendre une valeur strictement supérieure à 90°, typiquement sensiblement égale à 95°, correspondant à une position dite « reverse » de l'aube.

Comme il est connu, cette modification de l'angle de calage au cours du vol permet de faire évoluer la poussée du moteur et optimiser le rendement de la soufflante en fonction de la vitesse de l'aéronef. En effet, le régime des soufflantes est quasiment constant sur toutes les phases de fonctionnement, et c'est le calage des aubes qui fait varier la poussée. Ainsi, en phase de vol de croisière, les aubes sont orientées de sorte à ajuster la poussée en minimisant la puissance prélevée sur l'arbre de turbine et la consommation et en optimisant le rendement. A l'inverse, au décollage, les aubes sont orientées de sorte à maximiser la poussée afin d'accélérer puis de faire décoller l'avion.

Le pilotage de l'orientation des aubes est communément réalisé au moyen d'un mécanisme de changement de pas comprenant un vérin de commande comportant une partie mobile en translation suivant l'axe de la soufflante et un système de liaison reliant la partie mobile à l'aube de sorte à convertir la translation de la partie mobile en rotation de l'aube à calage variable. Ce vérin de commande est généralement un vérin hydraulique alimenté en fluide par une source solidaire de la nacelle de la turbomachine, ce qui nécessite de prévoir un transfert tournant entre la partie de la conduite immobile dans le repère nacelle et la partie de la conduite tournant avec le rotor de soufflante. Ce transfert tournant est le plus souvent réalisé au moyen d'un mécanisme tournant de transfert de fluide communément appelé « palier de transfert de fluide ». Document EP 1 832 509 B1 décrit un autre exemple d'un mécanisme de changement de pas pour ajuster une position angulaire d'au moins une aube à calage variable autour d'un axe de pivotement de l'aube.

Classiquement, le palier de transfert de fluide est positionné en amont du réducteur, autour de l'arbre de soufflante. Cet agencement présente cependant de nombreux désavantages :
- l'arbre de soufflante traversant le palier de transfert de fluide, celui-ci se retrouve être particulièrement encombrant, et
- en venant intercaler le palier de transfert de fluide entre le vérin et le réducteur, on allonge la turbomachine et, de ce fait, on augmente son poids, ce qui augmente sa consommation.

Pour remédier à ces problèmes, il a été proposé de placer le palier de transfert de fluide en aval du réducteur et de le relier au vérin par un tube traversant le réducteur. C'est l'agencement que l'on retrouve aujourd'hui sur la plupart des turbopropulseurs. Si cet agencement convient bien aux turbomachines dont l'arbre de soufflante est décalé par rapport à l'arbre de turbine, comme sur la grande majorité des turbopropulseurs, il pose en revanche des difficultés en cas d'intégration sur une turbomachine dont l'arbre de soufflante est coaxial à l'arbre de turbine, comme dans les turboréacteurs à soufflante non carénée. En effet, dans un tel cas, les contraintes suivantes se posent :
- l'accès au palier de transfert de fluide est rendu difficile, et
- le palier de transfert de fluide étant traversé par l'arbre de turbine, il se retrouve être particulièrement encombrant.

Ainsi, aucune des solutions existantes ne donne satisfaction lorsqu'il s'agit d'équiper une turbomachine dont l'arbre de soufflante est coaxial à l'arbre de turbine avec un palier de transfert de fluide destiné à l'alimentation d'un mécanisme de changement de pas d'un rotor de soufflante.

### EXPOSE DE L'INVENTION

Un objectif de l'invention est de faciliter l'accès à un palier de transfert de fluide destiné à l'alimentation d'un mécanisme de changement de pas d'un rotor de soufflante équipant une turbomachine dont l'arbre de soufflante est coaxial à l'arbre de turbine, tout en minimisant la longueur de la turbomachine. Un autre objectif est de minimiser l'encombrement du palier de transfert de fluide.

A cet effet, l'invention a pour objet, selon un premier aspect, un mécanisme de changement de pas pour ajuster une position angulaire d'au moins une aube à calage variable autour d'un axe de pivotement de l'aube, ledit mécanisme de changement de pas comprenant :
- un bâti fixe relativement à l'axe de pivotement,
- un vérin de commande comportant une partie fixe solidaire du bâti et une partie mobile mobile en translation suivant un axe longitudinal relativement à la partie fixe entre une position rétractée et une position déployée,
- un système de liaison reliant la partie mobile à l'aube à calage variable de sorte à convertir la translation de la partie mobile suivant l'axe longitudinal en une rotation de l'aube à calage variable autour de l'axe de pivotement, et
- un palier de transfert de fluide pour l'alimentation du vérin de commande en fluide de commande provenant d'une source relativement à laquelle le vérin de commande est mobile en rotation autour de l'axe longitudinal,
dans lequel le vérin de commande s'étend au moins pour partie autour du palier de transfert de fluide.

Selon des modes de réalisation particuliers de l'invention, le mécanisme de changement de pas présente également une ou plusieurs des caractéristiques suivantes, prise(s) isolément ou suivant toute(s) combinaison(s) techniquement possible(s) :
- le vérin de commande est coaxial au palier de transfert de fluide ;
- le vérin de commande s'étend autour de plus de la moitié, avantageusement autour de plus des trois-quarts, du palier de transfert de fluide ;
- le mécanisme de changement de pas comprend un dispositif de verrouillage de pas propre à bloquer la translation de la partie mobile relativement à la partie fixe dans au moins un sens, ledit dispositif de verrouillage de pas comprenant :
   ∘ un organe de blocage, mobile en translation relativement au bâti suivant l'axe longitudinal entre une position de fonctionnement et une position de verrouillage,
   ∘ un dispositif de rappel sollicitant l'organe de blocage vers sa position de verrouillage, et
   ∘ un dispositif de maintien pour maintenir l'organe de blocage dans sa position de fonctionnement en conditions normales de fonctionnement, le dispositif de maintien comprenant un vérin de contrebalancement comportant une chambre de contrebalancement alimentée en fluide de commande pour contrebalancer la sollicitation du dispositif de rappel,
   le palier de transfert de fluide étant configuré pour alimenter le vérin de contrebalancement en fluide de commande provenant de la source ;
- le palier de transfert de fluide comprend un stator et un rotor mobile conjointement avec le vérin de commande autour de l'axe longitudinal relativement au stator, le rotor s'étendant autour du stator ;
- le palier de transfert de fluide comprend une pluralité de circuits indépendants les uns des autres, au moins un desdits circuits comprenant :
   ∘ un conduit axial ménagé dans le stator,
   ∘ au moins un orifice radial ménagé dans le stator et reliant le conduit axial à la périphérie du stator,
   ∘ une gorge circonférentielle ménagée entre le rotor et le stator et dans laquelle débouche le ou chaque orifice radial, et
   ∘ au moins un conduit radial, ménagé dans le rotor, s'étendant radialement depuis la gorge jusqu'à un canal d'alimentation formé dans le bâti ou entre le bâti et le palier de transfert de fluide ;
- les conduits axiaux des différents circuits sont coaxiaux ;
- le vérin de commande comprend une première et une deuxième chambres fluidiques contenant chacune du fluide de commande pour commander le déplacement de la partie mobile relativement à la partie fixe, et le palier de transfert de fluide comprend un premier circuit raccordé fluidiquement à la première chambre fluidique pour l'alimentation de ladite première chambre fluidique en fluide de commande fourni par la source et un deuxième circuit raccordé fluidiquement à la deuxième chambre fluidique pour l'alimentation de ladite deuxième chambre fluidique en fluide de commande fourni par la source ;

L'invention a également pour objet, selon un deuxième aspect, un rotor de soufflante pour turbomachine comprenant un moyeu et une pluralité d'aubes à calage variable chacune pivotable relativement au moyeu autour d'un axe de pivotement propre, le rotor comprenant en outre un mécanisme de changement de pas selon le premier aspect pour ajuster une position angulaire de chacune des aubes à calage variable autour de son axe de pivotement respectif.

Selon des modes de réalisation particuliers de l'invention, le rotor de soufflante présente également une ou plusieurs des caractéristiques suivantes, prise(s) isolément ou suivant toute(s) combinaison(s) techniquement possible(s) :
- le rotor de soufflante comprend un palier de guidage pour le guidage en rotation autour de l'axe longitudinal dudit rotor de soufflante relativement à une nacelle de turbomachine, ledit palier de guidage ayant un diamètre interne supérieure à un diamètre externe du palier de transfert de fluide ; et
- l'axe longitudinal constitue un axe de rotation du rotor.

L'invention a aussi pour objet, selon un troisième aspect, une turbomachine comprenant un rotor de soufflante selon le deuxième aspect.

Selon un mode de réalisation particulier de l'invention, la turbomachine présente également la caractéristique suivante :
- l'axe longitudinal constitue un axe d'élongation de la turbomachine.

L'invention a encore pour objet, selon un quatrième aspect, un aéronef comprenant au moins une turbomachine selon le troisième aspect.

Enfin, l'invention a pour objet, selon un cinquième aspect, un procédé de changement du pas des aubes d'un rotor de soufflante pour turbomachine, chacune pivotable relativement à un moyeu du rotor de soufflante autour d'un axe de pivotement propre, ledit procédé comprenant l'ajustement d'une position angulaire de chacune desdites aubes autour de son axe de pivotement respectif au moyen d'un mécanisme de changement de pas selon le premier aspect.

Selon un mode de réalisation particulier de l'invention, le procédé présente également la caractéristique suivante :
- le procédé comprend une étape supplémentaire de verrouillage de l'orientation des aubes au moyen du dispositif de verrouillage de pas.

### BREVE DESCRIPTION DES FIGURES

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue de dessus d'un aéronef selon un exemple de réalisation de l'invention,
- la Figure 2 est une vue simplifiée en coupe longitudinale partielle d'une turbomachine de l'aéronef de la Figure 1,
- la Figure 3 est une vue simplifiée en coupe longitudinale d'une partie d'un mécanisme de changement de pas de la turbomachine de la Figure 2, selon un premier mode de réalisation, le mécanisme de changement de pas étant dans une première configuration,
- la Figure 4 est une vue similaire à celle de la Figure 3, le mécanisme de changement de pas étant dans une deuxième configuration,
- la Figure 5 est une vue similaire à celle de la Figure 3 d'une première variante du mécanisme de changement de pas de la Figure 3,
- la Figure 6 est une vue similaire à celle de la Figure 3 d'une deuxième variante du mécanisme de changement de pas de la Figure 3,
- la Figure 7 est une vue similaire à celle de la Figure 3 d'une troisième variante du mécanisme de changement de pas de la Figure 3,
- la Figure 8 est une vue simplifiée suivant un axe radial d'un bras de mise en rotation d'une aube à calage variable de la turbomachine de la Figure 2,
- la Figure 9 est une vue en perspective et en coupe partielle d'une vis à rouleaux satellites du mécanisme de changement de pas de la Figure 3,
- la Figure 10 est une vue de détail d'un palier de transfert de fluide du mécanisme de changement de pas de la Figure 3,
- la Figure 11 est une vue simplifiée en coupe longitudinale d'une partie d'un mécanisme de changement de pas de la turbomachine de la Figure 2 selon un deuxième mode de réalisation, et
- la Figure 12 est une vue de détail d'un palier de transfert de fluide du mécanisme de changement de pas de la Figure 11

### DESCRIPTION DETAILLEE D'UN EXEMPLE DE REALISATION

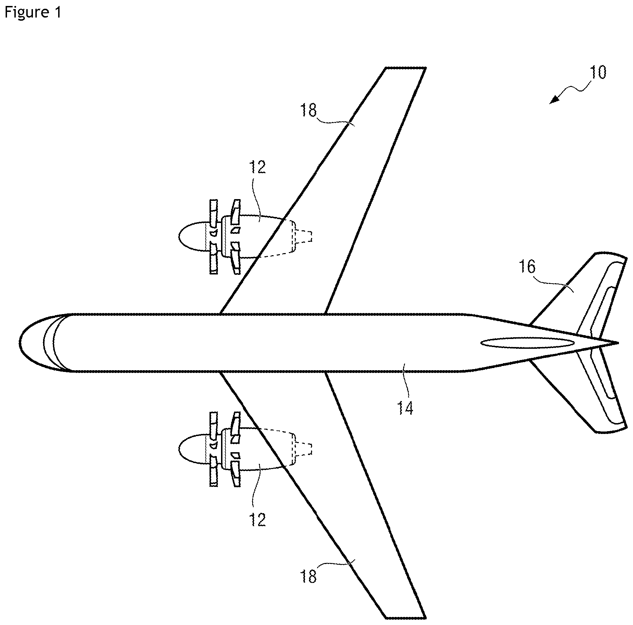

L'aéronef 10 représenté sur la Figure 1 comprend des turbomachines 12 pour le propulser.

Dans l'exemple représenté, l'aéronef 10 est un avion. Celui-ci comprend, de manière classique, un fuselage 14, un empennage 16 et deux ailes 18. Les turbomachines 12 sont ici au nombre de deux et sont chacune logées sous une aile 18 respective. En variante (non représentée), les turbomachines 12 sont disposées le long du fuselage 14, par exemple à proximité de l'empennage 16. En variante encore (également non représentée), l'aéronef 10 comprend une seule turbomachine 12 ou au moins trois turbomachines 12.

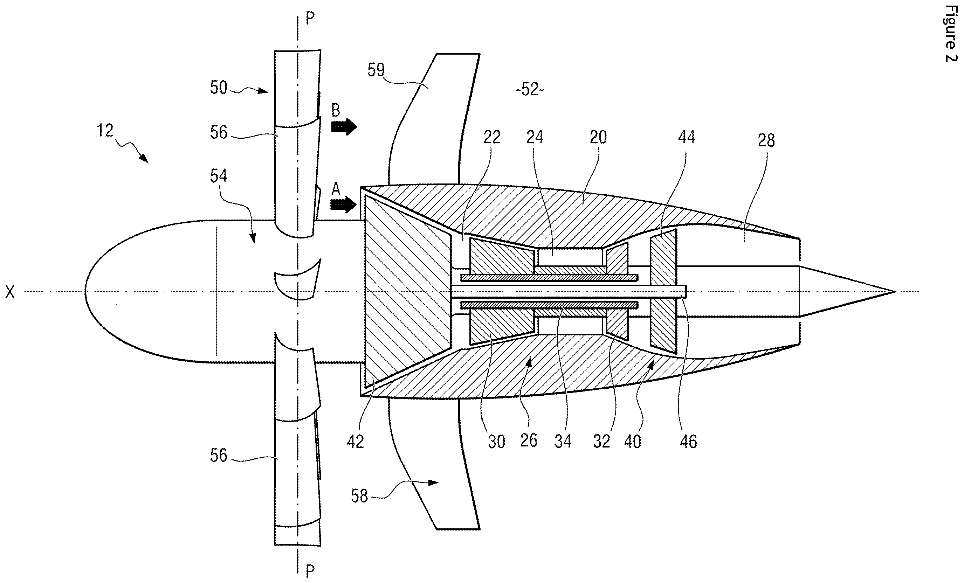

L'une des turbomachines 12 est représentée sur la Figure 2.

Comme visible sur cette Figure, la turbomachine 12 est allongée suivant un axe longitudinal X. Elle présente typiquement une symétrie angulaire autour dudit axe longitudinal X, c'est-à-dire qu'il existe au moins un angle pour lequel la turbomachine est invariante par rotation autour de l'axe longitudinal X.

Ici et dans la suite, les termes « intérieur » et « extérieur », « interne » et « externe », ainsi que leurs déclinaisons, s'entendent en référence à l'axe X, un élément qualifié de « intérieur » ou « interne » étant orienté vers l'axe X alors qu'un élément « extérieur » ou « externe » est orienté à l'opposé de l'axe X.

La turbomachine 12 comprend, de manière classique, une nacelle 20, une veine interne 22 de circulation d'un flux d'air à travers la nacelle 20, une chambre de combustion 24 logée dans la veine 22, un corps moteur 26 et une tuyère d'échappement des gaz 28.

Dans la suite, les termes « amont » et « aval » s'entendent en référence à un sens d'écoulement d'un flux d'air à travers la veine 22.

Le corps moteur 26 comprend un compresseur 30, une turbine 32 et un arbre de transmission 34 couplant la turbine 32 au compresseur 30 pour l'entraînement du compresseur 30 par la turbine 32. Le compresseur 30 est disposé en amont de la chambre de combustion 24 et alimente la chambre de combustion 24 en air comprimé. La turbine 32 est disposée en aval de la chambre de combustion 24 et reçoit les gaz d'échappement sortant de la chambre de combustion 24.

L'arbre de transmission 34 a pour axe de rotation l'axe longitudinal X.

L'arbre de transmission 34 est guidé en rotation par rapport à la nacelle 20 par le biais de paliers (non représentés).

Dans l'exemple représenté, la turbomachine 12 est une turbomachine à multiples corps, en particulier à double corps, comprenant un corps basse pression 40 en plus du corps moteur 26. Le corps moteur 26 constitue alors un corps haute pression, le compresseur 30 étant un compresseur haute pression, la turbine 32 étant une turbine haute pression et l'arbre de transmission 34 étant un arbre haute pression.

Le corps basse pression 40 comprend un compresseur basse pression 42, une turbine basse pression 44 et un arbre basse pression 46 couplant la turbine basse pression 44 au compresseur basse pression 42 pour l'entraînement du compresseur basse pression 42 par la turbine basse pression 44.

Le compresseur basse pression 42 est disposé en amont du compresseur haute pression 30 et alimente ce dernier en air comprimé. La turbine basse pression 44 est disposée en aval de la turbine haute pression 32 et reçoit les gaz d'échappement sortant de cette dernière.

L'arbre basse pression 46 est guidé en rotation par rapport à la nacelle 20 par le biais de paliers (non représentés).

L'arbre basse pression 46 est coaxial à l'arbre haute pression 34. Il a donc également pour axe de rotation l'axe longitudinal X. En particulier, l'arbre basse pression 46 s'étend à l'intérieur de l'arbre haute pression 34.

La turbomachine 12 comprend également une soufflante 50 pour entraîner le flux d'air dans une veine de circulation externe 52 entourant la nacelle 20. On distingue ainsi un flux d'air primaire A (chaud), constitué par la portion du flux d'air entraînée dans la veine de circulation interne 22, et un flux d'air secondaire B (froid), constitué par la portion du flux d'air entraînée dans la veine de circulation externe 52.

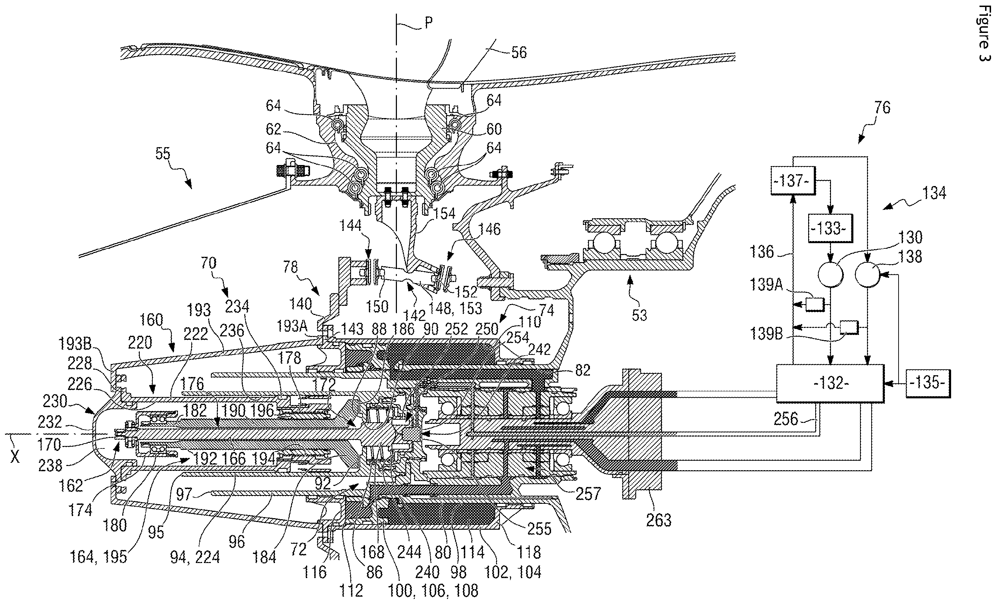

La soufflante 50 comprend un rotor de soufflante 54. Ce rotor de soufflante 54 est monté rotatif relativement à la nacelle 20 autour de l'axe longitudinal X par l'intermédiaire d'un palier de guidage 53. Il comprend un moyeu 55 (Figure 3) pourvu d'aubes de soufflante 56 s'étendant sensiblement radialement vers l'extérieur depuis le moyeu 55. Ces aubes 56, lorsqu'elles sont mises en rotation, entraînent le flux d'air dans la veine de circulation externe 52.

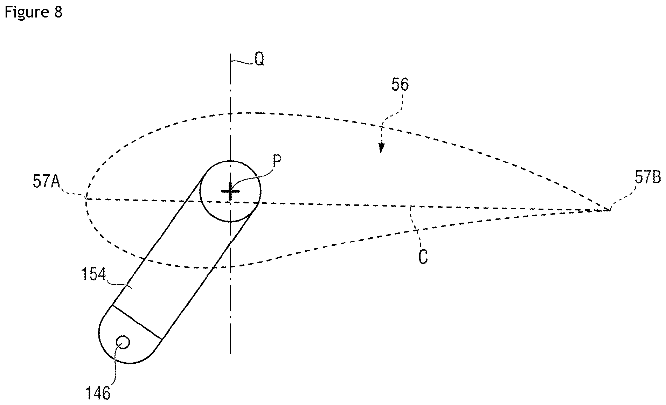

Comme visible sur la Figure 8, chaque aube 56 comprend un bord d'attaque 57A, un bord de fuite 57B et une corde C reliant le bord d'attaque 57A au bord de fuite 57B.

De retour à la Figure 2, le rotor de soufflante 54 est entraîné en rotation par la turbine basse pression 44, par l'intermédiaire de l'arbre basse pression 46. De préférence, cet entraînement se fait par l'intermédiaire d'un réducteur (non représenté) permettant au rotor de soufflante 54 de tourner à une vitesse inférieure à celle de l'arbre basse pression 46. En variante (non représentée), cet entraînement est direct, c'est-à-dire que le rotor de soufflante 54 est solidaire en rotation de l'arbre basse pression 46

Dans l'exemple représenté, la soufflante 50 comprend également un stator de soufflante 58 comprenant des aubes fixes 59 agencées à la périphérie de la nacelle 20, dans la veine de circulation externe 52, suivant un plan orthogonal à l'axe longitudinal X. Ce stator de soufflante 58 est ici agencé en aval du rotor de soufflante 54. En variante (non représentée), la soufflante 50 comprend, à la place du stator de soufflante 58, un rotor de soufflante contrarotatif.

Avantageusement, la soufflante 50 est, comme représenté, non carénée, c'est-à-dire que la veine de circulation externe 52 n'a aucune délimitation périphérique. La turbomachine 12 est alors constituée, comme représenté, par un turboréacteur à soufflante non carénée ou, en variante, par un turbopropulseur. En variante (non représentée), la veine de circulation externe 52 est définie entre la nacelle 20 et un carter de soufflante entourant la soufflante 50 ; la turbomachine 12 est alors typiquement constituée par un turboréacteur à fort taux de dilution (en anglais « bypass ratio »), le taux de dilution étant défini comme le rapport du débit du flux secondaire B (froid) sur le débit du flux primaire A (chaud).

Dans l'exemple représenté, la turbomachine 12 est en particulier du type « puller », c'est-à-dire que la soufflante 50 est disposée en amont de la veine de circulation interne 22 et entraîne également le flux d'air dans cette dernière. En variante (non représentée), la turbomachine est du type « pusher », c'est-à-dire que la soufflante 50 est placée autour de la moitié aval de la nacelle 20.

Les aubes 56 du rotor de soufflante 54 sont à calage variable, c'est-à-dire que chaque aube 56 est montée pivotante relativement au moyeu 55 autour d'un axe de pivotement P propre. Cet axe de pivotement P s'étend suivant la direction d'élongation de l'aube 56. Il est orthogonal à l'axe longitudinal X.

Chaque aube 56 est en particulier apte à pivoter autour de l'axe P relativement au moyeu 55 entre une position dite drapeau, dans laquelle la corde C de l'aube 56 est sensiblement parallèle à l'axe longitudinal X, et une position dite voile, dans laquelle la corde C de l'aube 56 est sensiblement orthogonale à l'axe longitudinal X. De préférence, chaque aube 56 est également apte à pivoter au-delà de la position voile, jusqu'à une position dite reverse, dans laquelle la corde C de l'aube 56 forme un angle strictement supérieure à 90°, par exemple sensiblement égal à 95°, avec l'axe longitudinal X. Les aubes 56 étant le plus souvent vrillées, la corde C prise comme référence pour la mesure de l'angle de calage est, par convention, constituée par la corde de l'aube à 75% du rayon du rotor de soufflante 54.

A cet effet, chaque aube 56 est solidaire, comme visible sur la Figure 3, d'une pièce d'attache 60 disposée en pied d'aube. Cette pièce d'attache 60 est montée rotative par rapport au moyeu 55 autour de l'axe de pivotement P. Plus précisément, la pièce d'attache 60 est montée rotative à l'intérieur d'un logement 62 ménagé dans le moyeu 55 par l'intermédiaire de billes 64 ou d'autres éléments roulants.

La soufflante 50 comprend en outre un mécanisme de changement de pas 70 pour ajuster l'angle de calage de chaque aube 56 autour de son axe de pivotement P de sorte à adapter les performances de la turbomachine 12 aux différentes phases de vol.

Un premier mode de réalisation du mécanisme de changement de pas 70 va maintenant être décrit, en référence aux Figures 3 à 9.

En référence à la Figure 3, le mécanisme de changement de pas 70 comprend, dans ce premier mode de réalisation, un bâti 72, un vérin de commande 74, un système 76 de pilotage du vérin 74 et un système de liaison 78.

Le bâti 72 est solidaire du moyeu 55 et est typiquement constitué par une partie du moyeu 55. Il est ainsi fixe relativement aux axes de pivotement P.

Le bâti 72 comprend un socle 80. Ce socle 80 est centré sur l'axe longitudinal X. Ici, il est traversé par les axes de pivotement P.

Dans l'exemple représenté, le socle 80 délimite un logement 82 ouvert vers l'aval. Ce logement 82 est en particulier cylindrique, typiquement cylindrique de révolution, et centré sur l'axe X.

De retour à la Figure 3, le socle 80 délimite également une cavité 86 débouchant dans une face amont 88 du socle 80 à travers un orifice 90 qui est ici centré sur l'axe X. Cette cavité 86 est en particulier cylindrique, typiquement cylindrique de révolution, et centrée sur l'axe X. Elle est interposée entre la face amont 88 et le logement 82.

Le socle 80 présente un butoir 92 orienté vers l'amont. Ce butoir 92 est ici formé par une partie de la face amont 88. Il s'étend sensiblement radialement et est en particulier agencé autour de l'orifice 90.

Dans l'exemple représenté, le bâti 72 comprend également un cylindre 94 faisant saillie vers l'amont depuis le socle 80. Ce cylindre 94 est centré sur l'axe X et ouvert à son extrémité amont 95. Il s'étend autour du butoir 92. Il est typiquement cylindrique de révolution.

Ici, le bâti 72 comprend encore un cylindre périphérique 96, coaxial au cylindre 94 et entourant ce dernier, faisant saillie vers l'amont depuis le socle 80. Ce cylindre 96 est ouvert à son extrémité amont 97. Il est typiquement cylindrique de révolution.

Le socle 80 et le cylindre périphérique 96 délimitent ensemble une surface périphérique externe 88 du bâti 72. Cette surface périphérique externe 88 est sensiblement cylindrique et centrée sur l'axe X. Elle est orientée radialement vers l'extérieur.

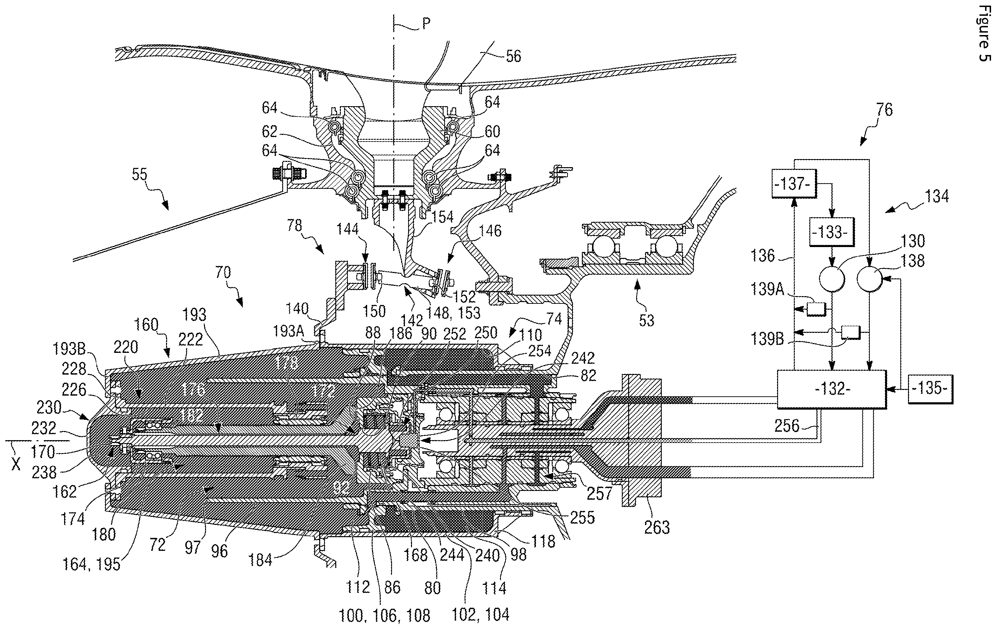

En variante, comme représenté sur la Figure 5, le bâti 72 ne comprend pas le cylindre 94.

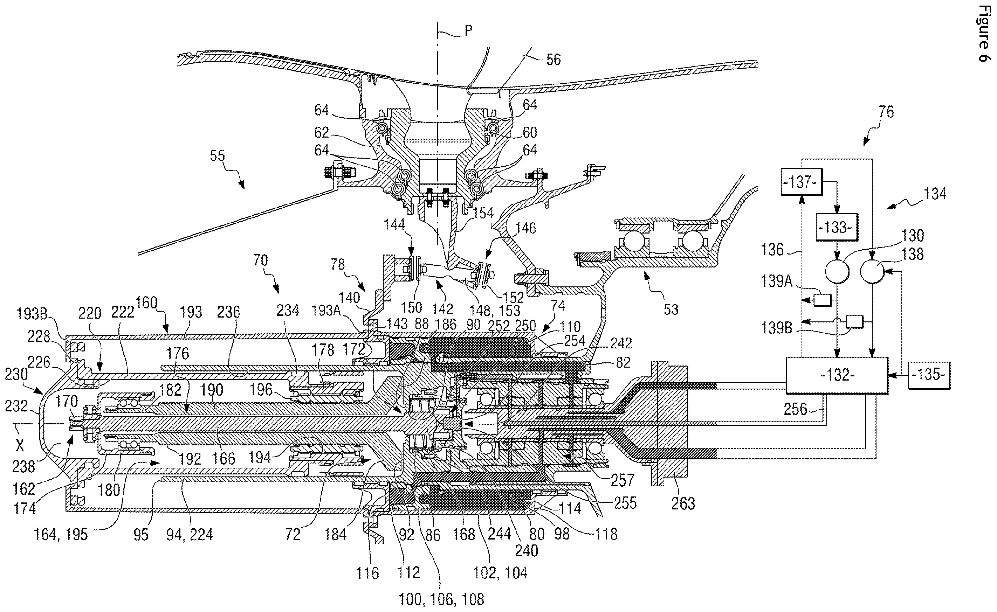

En variante encore, comme représenté sur la Figure 6, le bâti 72 ne comprend pas le cylindre périphérique 96. La surface périphérique externe 88 est alors délimitée par le socle 80 et le cylindre 94.

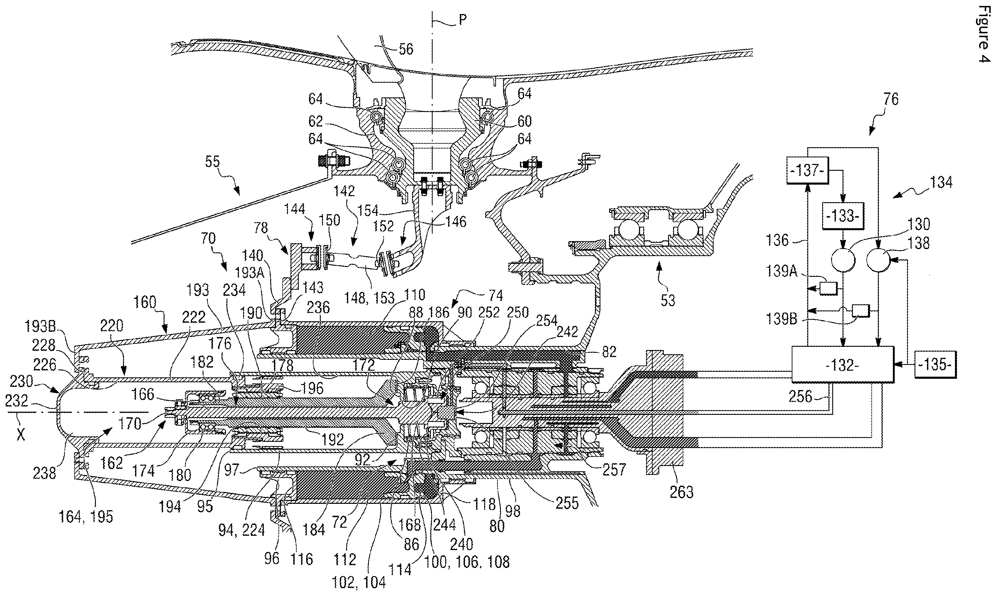

De retour à la Figure 3, le vérin de commande 74 comporte une partie fixe 100, solidaire du bâti 72, et une partie mobile 102 mobile en translation suivant l'axe longitudinal X relativement à la partie fixe 100 entre une position rétractée, représentée sur la Figure 3, et une position déployée représentée sur la Figure 4. Optionnellement, la partie mobile 102 est également mobile en rotation autour de l'axe longitudinal X sur un angle restreint, par exemple de l'ordre de 5°.

Le vérin de commande 74 est par ailleurs sensiblement centré sur l'axe longitudinal X. Le vérin de commande 74 a donc pour axe l'axe longitudinal X.

Le vérin de commande 74 comprend en particulier un cylindre 104, continu, formant l'un de la partie fixe 100 et de la partie mobile 102 et un piston 106 formant l'autre de la partie fixe 100 et de la partie mobile 102. Ici, le cylindre 104 forme la partie mobile 102 et le piston 106 forme la partie fixe 100.

Ainsi, dans l'exemple représenté, le cylindre 104 s'étend autour de la surface périphérique externe 88 du bâti 72, coaxialement à cette dernière, et le piston 106 est constitué par une collerette 108 solidaire du bâti 72 s'étendant radialement vers l'extérieur depuis la surface périphérique externe 88 jusqu'au cylindre 104.

Le cylindre 104 délimite une cavité interne 110. Le piston 106 divise ladite cavité interne 110 en deux chambres fluidiques 112, 114 contigües. Chacune contient un fluide de commande, typiquement constitué par une huile, pour commander le déplacement de la partie mobile 102 relativement à la partie fixe 100. Ce fluide de commande est à une première pression dans la première chambre fluidique 112 et à une deuxième pression dans la deuxième chambre fluidique 114. Les première et deuxième chambres fluidiques 112, 114 sont agencées de sorte que l'augmentation relative de la première pression (c'est-à-dire relativement à la deuxième pression) entraîne le déplacement du piston 110 vers sa position déployée, l'augmentation relative de la deuxième pression (c'est-à-dire relativement à la première pression) entraînant le déplacement du piston 110 vers sa position rétractée.

Ici, chacune des chambres fluidiques 112, 114 est délimitée intérieurement par la surface périphérique externe 88 du bâti 72 et extérieurement par le cylindre 104. La première chambre fluidique 112 est par ailleurs délimitée à son extrémité aval par le piston 106 et la deuxième chambre fluidique 114 est délimitée à son extrémité amont par le piston 106.

Le vérin de commande 74 est ainsi particulièrement compact, ce qui permet de l'alléger.

Dans l'exemple représenté sur la Figure 3, la partie mobile 102 comprend également une bague de guidage amont 116 et une bague de guidage aval 118 chacune solidaire du cylindre 104 et s'étendant radialement vers l'intérieur depuis le cylindre 104 jusqu'à la face périphérique externe 88 du bâti 72. La bague de guidage amont 116 est disposée en amont du piston 106 et délimite une extrémité amont de la première chambre fluidique 112. La bague de guidage aval 118 est disposée en aval du piston 106 et délimite une extrémité aval de la deuxième chambre fluidique 114.

Dans l'exemple représenté sur la Figure 3, chacune des bagues de guidage amont et aval 116, 118 constitue une bague d'étanchéité et ferme longitudinalement la première chambre fluidique 112, respectivement la deuxième chambre fluidique 114. Les chambres fluidiques 112, 114 sont ainsi fermées à chacune des extrémités longitudinales du vérin de commande 74

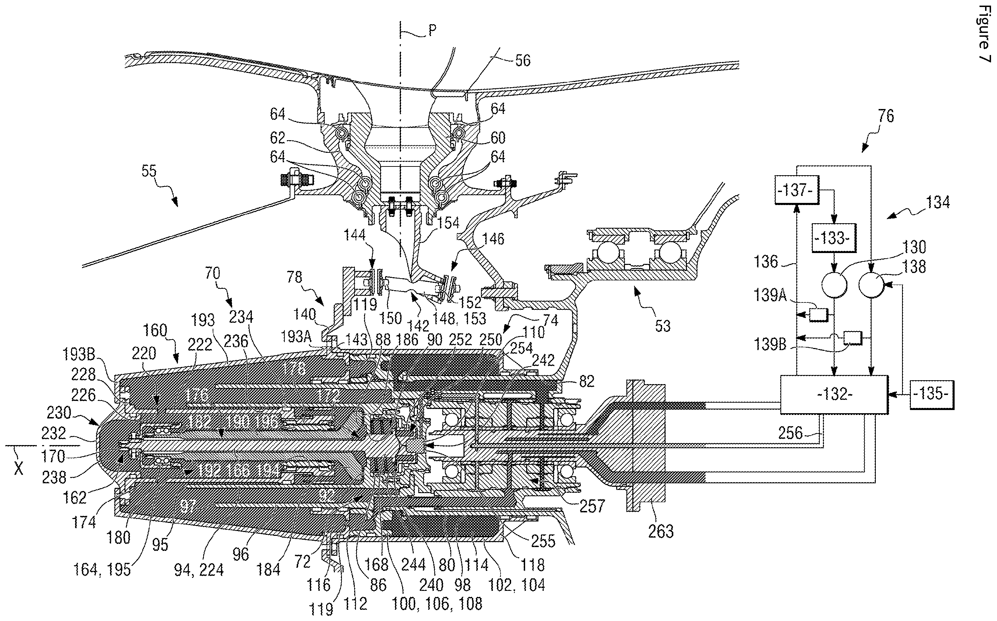

En variante, comme représenté sur la Figure 7, seule la bague de guidage aval 118 constitue une bague d'étanchéité. La bague de guidage amont 118 présente, elle, des perçages 119 permettant au fluide de commande de s'écouler à travers la bague de guidage amont 118.

En variante encore, comme représenté sur la Figure 5, la partie mobile 102 ne comprend pas de bague de guidage amont 118.

De retour à la Figure 3, le système de pilotage 76 comprend un générateur de pression 130 pour porter le fluide de commande à une troisième pression supérieure aux première et deuxième pressions, une unité de contrôle de pression 132 pour ajuster la pression du fluide de commande dans les première et deuxième chambres fluidiques 112, 114 au moyen de la troisième pression, et une ligne de retour 136 pour évacuer le fluide de commande dépressurisé. Le système de pilotage 76 comprend également un réservoir principal 133, un circuit de secours 134 et un module de commande 135.

Le générateur de pression 130 comprend par exemple une pompe apte à pomper le fluide pour le porter à la troisième pression, par exemple 100 bars. Une soupape de surpression principale 139A permet d'évacuer une partie du fluide de commande vers la ligne de retour 136 lorsque la pression du fluide de commande en aval du générateur de pression 130 excède la troisième pression.

L'unité de contrôle de pression 132 est alimentée en fluide de commande à la troisième pression par le générateur de pression 130. Elle est raccordée fluidiquement à la première chambre fluidique 112 et à la deuxième chambre fluidique 114. Elle est apte à répartir le fluide de commande entre la première chambre fluidique 112 et la deuxième chambre fluidique 114 de manière à ajuster la pression de fluide à l'intérieur de chacune de ces chambres 112, 114 et, ainsi, ajuster la position du piston 110 entre ses positions rétractée et déployée. Elle est également apte à évacuer du fluide de commande provenant des première et deuxième chambres fluidiques 112, 114 dans la ligne de retour 136.

Le réservoir principal 133 est configuré pour collecter du fluide de commande dépressurisé provenant de la ligne de retour 136. Il alimente le générateur de pression 130.

Le circuit de secours 134 est apte à alimenter la première chambre fluidique 112 en fluide de commande de manière à déplacer le piston 110 vers sa position déployée en cas de défaillance du générateur de pression 130. A cet effet, le circuit de secours 134 comprend un réservoir auxiliaire 137 et une pompe auxiliaire 138. Dans l'exemple représenté il comprend également une soupape de surpression auxiliaire 139B.

Le réservoir auxiliaire 137 est configuré pour collecter du fluide de commande dépressurisé provenant de la ligne de retour 136. Il alimente la pompe auxiliaire 138. Dans l'exemple représenté, il alimente également le réservoir principal 133, le fluide de commande dépressurisé provenant de la ligne de retour 136 transitant par le réservoir auxiliaire 137 avant d'atteindre le réservoir principal 133.

La pompe auxiliaire 138 est apte à pomper le fluide de commande dans le réservoir auxiliaire 137 pour le porter à la troisième pression. Elle est raccordée fluidiquement à l'unité de contrôle de pression 132 de manière à l'alimenter en fluide de commande à la troisième pression, l'unité de contrôle de pression 132 étant configurée pour rediriger l'intégralité du fluide de commande provenant de la pompe auxiliaire 138 vers la première chambre fluidique 112.

La soupape de surpression 139B est apte à évacuer une partie du fluide de commande vers la ligne de retour 136 lorsque la pression du fluide de commande en aval de la pompe auxiliaire 138 excède la troisième pression.

Le module de commande 135 est configuré pour recevoir une instruction de calage (non représentée) et en déduire un signal de commande transmis à l'unité de contrôle de pression 132. En particulier, le module de commande 135 est configuré pour transmettre à l'unité de contrôle de pression 132 un signal de commande destiné à augmenter la pression de fluide dans la première chambre 112 lorsque l'instruction de calage vise à faire augmenter le pas des aubes 56, et pour transmettre à l'unité de contrôle de pression 132 un signal de commande destiné à augmenter la pression de fluide dans la deuxième chambre 114 lorsque l'instruction de calage vise à faire réduire le pas des aubes 56.

Le module de commande 135 est également configuré pour transmettre au circuit de secours 134, plus particulièrement à sa pompe auxiliaire 138, une instruction de démarrage en cas de défaillance du générateur de pression 130.

Le système de pilotage 76 est fixe dans le repère attaché à la nacelle 20. Ainsi, le vérin de commande 74 est mobile en rotation autour de l'axe longitudinal X relativement audit système de pilotage 76.

Le système de liaison 78 relie la partie mobile 102 à chaque aube 56 de sorte à convertir la translation de la partie mobile 102 suivant l'axe longitudinal X et, le cas échéant, la rotation de la partie mobile 102 autour de l'axe longitudinal X en une rotation de chaque aube 56 autour de son axe de pivotement P. En particulier, le système de liaison 78 relie la partie mobile 102 à chaque aube 56 de sorte à convertir :
- la translation de la partie mobile 102 suivant l'axe longitudinal X dans un premier sens en une rotation de l'aube à calage variable 56 autour de l'axe de pivotement P vers la position voile, et
- la translation de la partie mobile 102 suivant l'axe longitudinal X dans un deuxième sens opposé au premier sens en une rotation de l'aube à calage variable 56 autour de l'axe de pivotement P vers la position drapeau.

A cet effet, le système de liaison 78 comprend une couronne de synchronisation 140 solidaire de la partie mobile 102 et, pour chacune des aubes 56, un mécanisme 142 de liaison de l'aube 56 à la couronne de synchronisation 140.

La couronne de synchronisation 140 s'étend dans un plan radial autour de la partie mobile 102. Elle est en particulier fixée à une extrémité amont 143 de la partie mobile 102.

Chaque mécanisme de liaison 142 comprend une première articulation 144 solidaire de la partie mobile 102, une deuxième articulation 146 solidaire de l'aube 56, à l'écart de l'axe de pivotement P de ladite aube 56, et un organe de liaison 148 reliant la première articulation 144 à la deuxième articulation 146.

La première articulation 144 est portée par la couronne de synchronisation 140. Elle est ici constituée par une liaison rotule.

La deuxième articulation 146 est également constituée par une liaison rotule. Elle est excentrée relativement à l'axe de pivotement P.

L'organe de liaison 148 présente une première extrémité 150 articulée à la première articulation 144 et une deuxième extrémité 152 articulée à la deuxième articulation 146. Avantageusement l'organe de liaison 148 est rigide et de longueur réglable, c'est-à-dire que la distance entre les première et deuxième extrémités 150, 152 peut être modifiée, ce qui permet d'en régler précisément la longueur à l'arrêt de sorte à permettre le pilotage de l'angle de calage de chaque aube 56 par le mécanisme de changement de pas 70.

L'organe de liaison 148 est ici constitué par une bielle 153.

Dans l'exemple représenté chaque mécanisme de liaison 142 comprend également une manivelle 154 reliant la pièce d'attache 60 à la deuxième articulation 146. Cette manivelle 154 est rigide et solidaire de la pièce d'attache 60. Elle s'étend au moins pour partie suivant une direction orthogonale à l'axe de pivotement P. Elle forme un bras de mise en rotation de l'aube 56.

Dans l'exemple représenté sur la Figure 3, le premier sens va de l'amont vers l'aval, c'est-à-dire que le déplacement de l'organe mobile 102 vers le butoir 92 (en d'autres termes vers sa position rétractée) entraîne une rotation de chaque aube 56 vers sa position voile, et le deuxième sens va de l'aval vers l'amont, c'est-à-dire que le déplacement de l'organe mobile 102 à l'écart du butoir 92 (en d'autres termes vers sa position déployée) entraîne une rotation de chaque aube 56 vers sa position drapeau. De plus, la première articulation 144 est disposée à l'amont de la deuxième articulation 146.

A cet effet, la deuxième articulation 146 est, comme visible sur la Figure 8, placée à l'opposé du bord de fuite 57B relativement à un plan Q orthogonal à la corde C et contenant l'axe de pivotement P.

Cet agencement particulier permet, lorsque le mécanisme de changement de pas 70 est immobilisé, que les sollicitations naturelles de l'aube 56 vers sa position voile fassent travailler l'organe de liaison 148 en traction et non en compression. Le risque de flambage de l'organe de liaison 148 est donc très faible, de sorte qu'il est possible d'utiliser un organe de liaison 148 relativement peu résistant et ainsi d'alléger le mécanisme de changement de pas 70.

Le mécanisme de changement de pas 70 comprend encore un dispositif de verrouillage de pas 160 propre à bloquer la translation de la partie mobile 102 du vérin de commande 74 dans le premier sens, c'est-à-dire ici vers sa position rétractée.

Ce dispositif de verrouillage 160 comprend un organe de support 162 et un système vis-écrou 164.

L'organe de support 162 est mobile en translation relativement au bâti 72 suivant l'axe longitudinal X entre une position de fonctionnement, représentée sur les Figures 3 à 7, et une position de verrouillage (non représentée). L'organe de support 162 se déplace de sa position de fonctionnement à sa position de verrouillage par translation dans le premier sens, c'est-à-dire, dans l'exemple représenté sur la Figure 3, par translation de l'amont vers l'aval. En d'autres termes, la position de fonctionnement de l'organe de support 162 est disposée en amont de sa position de verrouillage.

L'organe de support 162 comprend un corps 166 allongé suivant l'axe longitudinal X et centré sur l'axe longitudinal X. Ledit corps 166 présente une première extrémité longitudinale 168, en particulier une extrémité longitudinale aval, engagée à travers l'orifice 90 du bâti 72, et une deuxième extrémité longitudinale 170 libre. Le corps 166 est ici plein.

La première extrémité longitudinale 168 et l'orifice 90 du bâti 72 forment ensemble un système de guidage 172 guidant l'organe de support 162 relativement au bâti 72. Ce système de guidage 172 est ici disposé d'un côté aval du système vis-écrou 164.

L'organe de support 162 comprend également une jupe 174 solidaire du corps 166 et agencée autour de la deuxième extrémité longitudinale 170 du corps 166.

Le système vis-écrou 164 comprend une vis 176 et un écrou 178.

La vis 176 s'étend autour du corps 166 de l'organe de support 162 et est coaxiale audit corps 166. Elle est solidaire en translation de l'organe de support 162 et montée mobile en rotation autour de l'axe longitudinal X relativement à l'organe de support 162. A cet effet, la vis 176 est assemblée à l'organe de support 162 par l'intermédiaire d'un palier 180. Ce palier 180 est ici interposé entre la jupe 174 de l'organe de support 162 et une portion d'extrémité 182 de la vis 176, logée entre le corps 166 et la jupe 174.

La vis 176 présente une deuxième portion d'extrémité longitudinale 184 opposée à la portion d'extrémité 182. Cette deuxième portion d'extrémité longitudinale 184 définit une surface de butée 186 radiale. Cette surface de butée 186 est à distance du bâti 72 lorsque l'organe de support 162 est en position de fonctionnement et en appui contre le butoir 92 du bâti 72 lorsque l'organe de support 162 est en position de verrouillage.

Ici, la deuxième portion d'extrémité longitudinale 184 s'évase depuis un corps fileté 190 de la vis 176 jusqu'à la surface de butée 186. Ainsi, la surface de contact entre la surface de butée 186 et le butoir 92 est augmentée, ce qui accroit les forces de frottement entre la surface de butée 186 et le butoir 92 et permet une meilleure transmission des efforts de freinage et de blocage.

La surface de butée 186 et le butoir 92 sont ici chacun lisses. En variante (non représentée), la surface de butée 186 et/ou le butoir 92 présente(nt) des aspérités, de manière à accroitre encore davantage les forces de frottement entre la surface de butée 186 et le butoir 92 et permettre une transmission des efforts encore accrue.

La surface de butée 186 s'étend en particulier sensiblement radialement. Elle est orientée dans le premier sens, c'est-à-dire, dans l'exemple représenté sur la Figure 3, vers l'aval. Ici, elle est ménagée à une extrémité aval de la vis 176.

Le corps fileté 190 s'étend de l'une à l'autre des portions d'extrémité 182, 184. Il présente un filetage externe 192 à sa circonférence.

Le corps fileté 190 et l'écrou 178 sont logés à l'intérieur du cylindre 94 du bâti 72.

L'écrou 178 est solidaire de la partie mobile 102 du vérin 74 et coaxial à la vis 176. Il coopère avec la vis 176 de sorte qu'une translation de l'écrou 178 suivant l'axe longitudinal X relativement à la vis 176 entraîne la rotation de la vis 176 autour de l'axe longitudinal X relativement à l'organe de support 162.

L'écrou 178 présente un taraudage interne 194.

Le système vis-écrou 164 est en particulier formé par un système de vis à rouleaux satellites 195 réversible. De manière classique, ce système de vis à rouleaux satellites 195 comprend, outre la vis 176 et l'écrou 178, une pluralité de rouleaux 196 interposés entre la vis 176 et l'écrou 178, chaque rouleau 196 étant allongé parallèlement à l'axe longitudinal X.

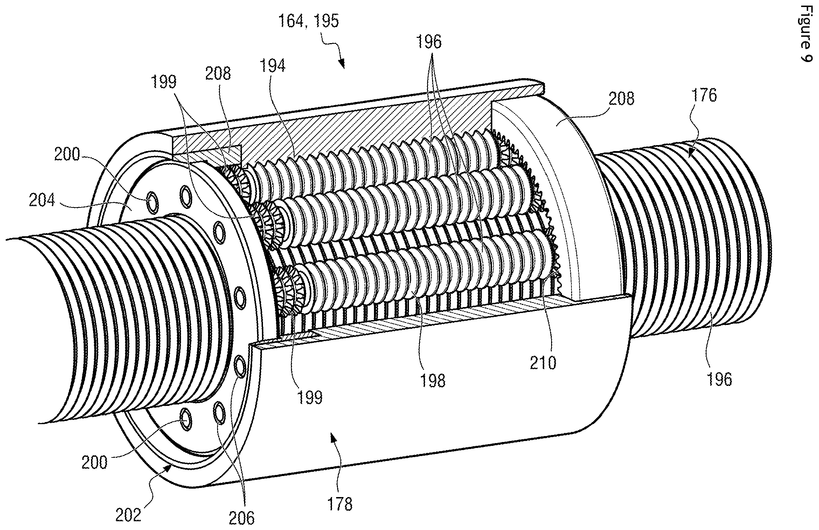

Comme visible sur la Figure 9, chaque rouleau 196 présente un filetage 198 en prise avec le filetage externe 192 de la vis 176 et le taraudage interne 194 de l'écrou 176. Il comprend en outre des dentures externes 199 situées à ses extrémités et prolongées de tourillons lisses 200.

Le système de vis à rouleaux satellites 195 présente également, de manière toujours classique, un dispositif 202 de guidage et de maintien des rouleaux 196. Ce dispositif de guidage et de maintien 202 comprend des porte-rouleaux 204 (également appelés bagues d'espacement) qui sont montés coaxialement à la vis 176, entre celle-ci et l'écrou 178, avec des encoches 206 accueillant les tourillons 200 des rouleaux 196. Il comprend également une denture de synchronisation 210 dans laquelle s'engrènent les dentures externes 198 situées aux extrémités respectives des rouleaux 196. Cet engrenage des dentures externes 198 dans la denture de synchronisation 210 forme un train planétaire dont le rôle est d'assurer une synchronisation du mouvement satellitaire, encore dit planétaire ou épicycloïdal, des rouleaux 196, fluidifiant ainsi le mouvement des rouleaux 196 en les aidant à rouler aisément, avec le moins de glissement possible, sur le filetage 192 de la vis 176 et le taraudage 194 de l'écrou 178.

Dans l'exemple représenté, le système de vis à rouleaux satellites 195 est du type standard, les rouleaux 196 étant solidaires en translation de l'écrou 178. La denture de synchronisation 210 est constituée par la denture interne de couronnes 208 solidaires de l'écrou 178 et montées respectivement à chaque extrémité longitudinale de l'écrou 178, ce dernier ayant une extension longitudinale sensiblement égale à celle de la portion filetée des rouleaux 196 et inférieure à celle du corps fileté 190 de la vis 176.

En variante (non représentée), le système de vis à rouleaux satellites 195 est du type inversé, les rouleaux 196 étant solidaires en translation de la vis 176. La denture de synchronisation 210 est alors constituée par deux dentures externes de la vis 176 à chaque extrémité longitudinale du corps fileté 190, ce dernier ayant une extension longitudinale sensiblement égale à celle de la portion filetée des rouleaux 196 et inférieure à celle de l'écrou 178.

En variante encore, le système de vis à rouleaux satellites 195 est constitué par un système de vis à rouleaux satellites recirculés tel que par exemple celui décrit dans le document EP 275 504 A2, ou par un système de vis à rouleaux à roulement tel que par exemple celui décrit dans le document EP 168 942 A1 ou celui décrit dans le document EP 671 070 A1.

Cette caractéristique permet une bonne transmission des efforts de l'écrou 178 à la vis 176 par le système vis-écrou 164, tout en conservant un petit pas dans la liaison hélicoïdale du système vis-écrou 164. En particulier, en cas de blocage de la rotation de la vis 176, elle permet d'immobiliser l'écrou 178 relativement à la vis 176 même en l'absence d'écrou de verrouillage distinct. Il est ainsi possible de s'affranchir de l'usage d'un écrou de verrouillage distinct, ce qui simplifie la fabrication et réduit les coûts du mécanisme, tout en augmentant sa fiabilité et minimisant sa masse.

En variante (non représentée), le système vis-écrou 164 est constitué par un système vis-écrou similaire à celui décrit dans EP 1 832 509.

De retour à la Figure 3, le dispositif de verrouillage de pas 160 est, dans l'exemple représenté sur cette Figure, hors des chambres fluidiques 112, 114 du vérin de commande 74. Cet agencement permet d'assembler au bâti 72 le dispositif de verrouillage de pas 160 et le vérin 74 séparément l'un de l'autre, ce qui facilite le montage du mécanisme de changement de pas 70 et réduit ainsi les coûts.

Comme visible sur la Figure 3, une partie du dispositif de verrouillage de pas 160 s'étend même longitudinalement à l'écart du vérin 74. En d'autres termes, il existe un plan radial au-delà duquel s'étend une partie du dispositif de verrouillage de pas 160 sans que le vérin 74 ne s'étende au-delà dudit plan radial. En particulier, ladite partie du dispositif de verrouillage de pas 160 s'étend en amont du vérin 74.

Pour permettre cet agencement, le dispositif de verrouillage de pas 160 comprend une virole 193 reliant l'écrou 178 à la partie mobile 102 du vérin 74. Cette virole 193 fait ici saillie longitudinalement vers l'amont depuis le vérin de commande 74. Elle est en particulier tronconique, son diamètre allant décroissant depuis son extrémité aval 193A, rattachée au vérin 74, jusqu'à son extrémité amont 193B, rattachée à l'écrou 178.

Dans l'exemple représenté sur la Figure 3, le dispositif de verrouillage de pas 160 est également longitudinalement en porte-à-faux relativement au bâti 72. En d'autres termes, toute la partie du bâti 72 soutenant le dispositif de verrouillage 160 est située longitudinalement d'un même côté, ici en aval, du dispositif de verrouillage 160 ; le dispositif de verrouillage 160 n'est pas encadré longitudinalement par la partie du bâti 72 le soutenant. Grâce à cet agencement, on fait l'économie d'un support disposé en amont du dispositif de verrouillage 160, ce qui facilite l'accès au mécanisme de changement de pas 70 et plus particulièrement au système de liaison 78.

Ainsi, le vérin de commande 74 est, dans l'exemple représenté sur la Figure 3, disposé longitudinalement du même côté de l'écrou 178, ici le côté aval, que le dispositif de guidage 172 et le butoir 92.

Pour assurer un bon support du dispositif de verrouillage 160 malgré ce porte-à-faux, le mécanisme de changement de pas 70 comprend un dispositif 220 de guidage de l'écrou 178 relativement au bâti 72. Ce dispositif de guidage 220 comporte un cylindre interne 222 solidaire de l'écrou 178 et un cylindre externe 224 solidaire du bâti 72, le cylindre interne 222 coopérant avec le cylindre externe 224 de manière à coulisser longitudinalement à l'intérieur de ce dernier.

L'écrou 178 est en particulier monté sur une face interne 226 du cylindre interne 222. Le cylindre interne 222 présente une extrémité amont 228 à laquelle est fixée l'extrémité amont 193B de la virole 193.

Le cylindre externe 224 est ici constitué par le cylindre 94 du bâti 72.

Le dispositif de verrouillage de pas 160 nécessite une lubrification. A cet effet, le dispositif de verrouillage 160 comprend un carter 230 délimitant au moins partiellement une enceinte de circulation d'un fluide de lubrification du dispositif de verrouillage de pas 160. Ce carter 230 est solidaire de l'écrou 178 et entoure l'écrou 178, la vis 176 et l'organe de support 162.

Dans les exemples des Figures 3, 4 et 6, le carter 230 comprend le cylindre interne 222 et un bouchon 232 fermant une extrémité du cylindre interne 222 opposée au bâti 72, ici l'extrémité amont 228. Le cylindre interne 222 présente à sa périphérie une étanchéité 234 en contact avec une face interne 236 du cylindre externe 224. Ainsi, le cylindre externe 224 et le carter 230 délimitent ensemble une enceinte 238 de circulation d'un fluide de lubrification du dispositif de verrouillage 160. Cette enceinte 238 est fluidiquement isolée des chambres fluidiques 112, 114 du vérin 74 par l'étanchéité 234 et la bague de guidage amont 116. L'étanchéité 234 et la bague de guidage 116 forment ainsi des étanchéités du mécanisme de changement de 70 isolant fluidiquement du dispositif de verrouillage de pas 160 les chambres fluidiques 112, 114 du vérin 74.

Avantageusement, le fluide de lubrification du dispositif de verrouillage 160 est constitué par une huile. Le dispositif de verrouillage de pas 160 comprend alors un accumulateur (non représenté) permettant le stockage du fluide de lubrification lorsque le vérin 74 est en position rétractée et le transfert du fluide de lubrification dans l'enceinte 238 lorsque le vérin 74 se déplace vers sa position déployée. En variante, le fluide de lubrification du dispositif de verrouillage 160 est constitué par une graisse déposée sur la vis 176 et les roulements du palier 180.

Dans l'exemple de la Figure 5, où le cylindre externe 224 et la bague de guidage amont 116 sont absents, ainsi que dans la Figure 7, où le cylindre interne 222 et la bague de guidage amont 116 sont percés, le carter 230 est constitué par la virole 193 et par un bouchon 239 fermant l'extrémité amont 193B de la virole 193. La première chambre fluidique 112 est alors en communication fluidique avec l'intérieur du carter 230, le fluide de commande constituant le fluide de lubrification du dispositif de verrouillage 160.

Cette variante permet de s'affranchir de l'utilisation d'un accumulateur. Elle nécessite cependant une pompe 130 à débit plus important que dans la variante des Figures 3, 4 et 6.

Le dispositif de verrouillage 160 comprend également un dispositif de rappel 240 sollicitant l'organe de support 162 vers sa position de verrouillage et un dispositif de maintien 242 pour maintenir l'organe de support 162 dans sa position de fonctionnement lorsque le mécanisme de changement de pas 70 est en conditions normales de fonctionnement.

Le dispositif de rappel 240 est ici constitué par un ressort de compression comprimé entre le bâti 72 et un épaulement 244 solidaire de l'organe de support 162. Il est en particulier logé dans la cavité 86, entre l'épaulement 244 et l'orifice 90.

Le dispositif de maintien 242 comprend un vérin de contrebalancement 250 comportant un piston de contrebalancement 252 et une chambre de contrebalancement 254.

Le piston de contrebalancement 252 est monté mobile en translation suivant l'axe longitudinal X relativement au bâti 72. Il est en particulier coaxial à l'organe de support 162. Dans l'exemple représenté, il est agencé dans le prolongement longitudinal de l'organe de support 162, entre l'organe de support 162 et la chambre de contrebalancement 254.

La chambre de contrebalancement 254 est délimitée entre le piston de contrebalancement 252 et le bâti 72. En particulier, la chambre de contrebalancement 254 est délimitée entre le piston de contrebalancement 252 et un fond 255 de la cavité 86 opposé à l'orifice 90 ; le système de guidage 172, le dispositif de rappel 240 et le dispositif de maintient 242 sont ainsi tous disposés longitudinalement d'un même côté, ici le côté aval, du système vis-écrou 164 et donc en particulier de l'écrou 178.

La chambre de contrebalancement 254 est raccordée fluidiquement au générateur de pression 130 par un circuit de connexion fluidique 256 de sorte à être alimentée en fluide de commande à la troisième pression. Elle est destinée à contrebalancer la sollicitation du dispositif de rappel 240 lorsque cette alimentation est active.

A cet effet, le vérin de contrebalancement 250 est agencé de sorte que la pression exercée sur le piston 252 par le fluide contenu dans la chambre 254 soit orientée dans une direction opposée à celle de la sollicitation du dispositif de rappel 240 : dans l'exemple représenté, le piston de contrebalancement 252 est interposé entre la chambre 254 et l'épaulement 244 et l'épaulement 244 est interposé entre le piston 252 et le dispositif de rappel 240. De plus, le piston de contrebalancement 252 et la chambre de contrebalancement 254 sont dimensionnés de sorte que, lorsque la chambre 254 est alimentée en fluide de commande à la troisième pression, la force exercée par le fluide de commande sur le piston 252 soit supérieure à la sollicitation du dispositif de rappel 240.

Ainsi, lorsque l'alimentation de la chambre 254 en fluide de commande à la troisième pression est active, la sollicitation du dispositif de rappel 240 est annulée et l'organe de support 162 maintenu en position de fonctionnement.

Dans l'exemple représenté, l'unité de contrôle de pression 132 est interposée fluidiquement entre le générateur de pression 130 et le circuit de connexion fluidique 256. Elle présente une première configuration, dans laquelle elle isole le circuit de connexion fluidique 256 de la ligne de retour 136, et une deuxième configuration, dans laquelle elle raccorde fluidiquement le circuit de connexion fluidique 256 à la ligne de retour 136.

L'unité de contrôle de pression 132 est configurée pour être normalement dans sa première configuration et pour basculer dans sa deuxième configuration sur réception d'une instruction de commande transmise par le module de commande 135.

Toujours en référence à la Figure 3, le mécanisme de changement de pas 70 comprend enfin un palier de transfert de fluide 257 destiné à l'alimentation du vérin de commande 74 en fluide de commande provenant du système de pilotage 76.

A cet effet, le palier de transfert de fluide 257 est configuré pour transférer le fluide de commande provenant du repère fixe attaché à la nacelle 20 au repère tournant attaché au rotor de soufflante 54 et plus particulièrement aux première et deuxième chambres 112, 114 du vérin 74.

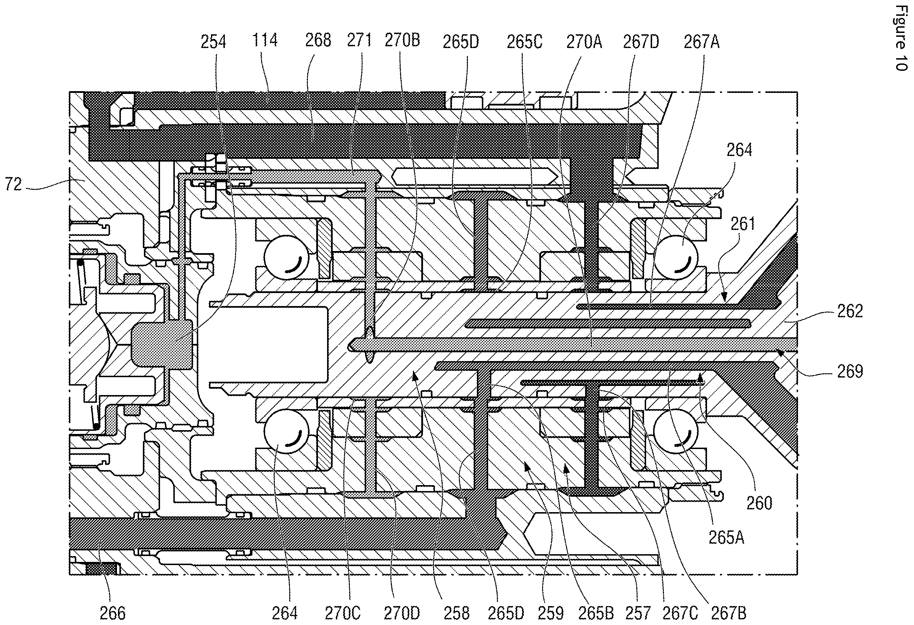

Pour cela, le palier de transfert de fluide 257 comprend, en référence à la Figure 10, un stator 258 fixe par rapport à la nacelle 20 et un rotor 259 mobile conjointement avec le rotor de soufflante 54 (et donc avec le vérin de commande 74) autour de l'axe longitudinal X relativement au stator 258. Il comprend également un premier circuit 260 raccordé fluidiquement à la première chambre fluidique 112 pour l'alimentation de ladite première chambre fluidique 112 en fluide de commande fourni par le système de pilotage 76 et un deuxième circuit 261 raccordé fluidiquement à la deuxième chambre fluidique 114 pour l'alimentation de ladite deuxième chambre fluidique 114 en fluide de commande fourni par le système de pilotage 76.

Le stator 258 est en forme de cylindre de révolution, en particulier en forme de cylindre plein, coaxial à l'axe longitudinal X. Il est relié par son extrémité aval 262 à une structure 263 (Figure 3) de la nacelle 20.

Le rotor 259 est en forme de cylindre de révolution coaxial à l'axe longitudinal X. Il s'étend autour du stator 258. Sa périphérie est en contact avec le bâti 72. Il est guidé en rotation autour de l'axe X par rapport au stator 258 par l'intermédiaire de roulements 264 interposés entre le rotor 259 et le stator 258.

Le palier de transfert de fluide 257 est ainsi coaxial à l'axe X. Il est donc également coaxial au vérin de commande 74.

Le premier circuit 260 comprend un premier conduit axial 265A ménagé dans le stator 258, une pluralité de premiers orifices radiaux 265B (un seul d'entre eux étant représenté ici) ménagés dans le stator 258 et reliant le conduit axial 265A à la périphérie du stator 258, une première gorge circonférentielle 265C ménagée entre le rotor 259 et le stator 258 et dans laquelle débouche chaque orifice radial 265B, et une pluralité de premiers conduits radiaux 265D, ménagés dans le rotor 259, s'étendant radialement depuis la gorge 265C jusqu'à un premier canal 266 d'alimentation de la première chambre fluidique 112 formé dans le bâti 72.

Le premier conduit axial 265A a une extension axiale parallèlement à l'axe X. Dans l'exemple représenté, il est en particulier rectiligne et coaxial à l'axe X. En variante (non représentée), le premier conduit axial 265A est courbe et/ou a également une extension radiale suivant une direction orthogonale à l'axe X.

Par ailleurs, le premier conduit axial 265A a, l'exemple représenté, une section radiale annulaire, c'est-à-dire qu'il est plein en son centre.

Chaque premier orifice radial 265B a une extension radiale suivant une direction radiale orthogonale à l'axe X. Dans l'exemple représenté, chaque premier orifice radial 265B est en particulier rectiligne suivant une direction radiale. En variante (non représentée), au moins un premier orifice radial 265B est courbe et/ou a également une extension axiale parallèlement à l'axe X.

La première gorge circonférentielle 265C s'étend parallèlement à un plan radial orthogonal à l'axe X.

Chaque premier conduit radial 265D a une extension radiale suivant une direction radiale orthogonale à l'axe X. Dans l'exemple représenté, chaque premier conduit radial 265D est en particulier rectiligne suivant une direction radiale. En variante (non représentée), au moins un premier conduit radial 265D est courbe et a également une extension axiale parallèlement à l'axe X et/ou une extension circonférentielle suivant une direction orthogonale à l'axe X et à la direction radiale.

Le premier canal d'alimentation 266 s'étend depuis une sortie des premiers conduits radiaux 265D jusqu'à une entrée de la première chambre fluidique 112. Dans l'exemple représenté, il est sensiblement rectiligne et s'étend sensiblement parallèlement à l'axe X.

Le deuxième circuit 261 comprend un deuxième conduit axial 267A ménagé dans le stator 258, une pluralité de deuxièmes orifices radiaux 267B (un seul d'entre eux étant représenté ici) ménagés dans le stator 258 et reliant le conduit axial 267A à la périphérie du stator 258, une deuxième gorge circonférentielle 267C ménagée entre le rotor 259 et le stator 258 et dans laquelle débouche chaque orifice radial 267B, et une pluralité de deuxièmes conduits radiaux 267D, ménagés dans le rotor 259, s'étendant radialement depuis la gorge 267C jusqu'à un deuxième canal 268 d'alimentation de la deuxième chambre fluidique 114 formé dans le bâti 72.

Le deuxième conduit axial 267A a une extension axiale parallèlement à l'axe X. Avantageusement, il est coaxial au premier conduit axial 265A. Dans l'exemple représenté, il est en particulier rectiligne et coaxial à l'axe X. En variante (non représentée), le deuxième conduit axial 267A est courbe et/ou a également une extension radiale suivant une direction orthogonale à l'axe X.

Par ailleurs, le deuxième conduit axial 267A a, l'exemple représenté, une section radiale annulaire, c'est-à-dire qu'il est plein en son centre. Ici, il s'étend autour du premier conduit axial 265A.

Chaque deuxième orifice radial 267B a une extension radiale suivant une direction radiale orthogonale à l'axe X. Dans l'exemple représenté, chaque deuxième orifice radial 267B est en particulier rectiligne suivant une direction radiale. En variante (non représentée), au moins un deuxième orifice radial 267B est courbe et/ou a également une extension axiale parallèlement à l'axe X.

Chaque deuxième orifice radial 267B est ici disposé axialement en aval des premiers orifices radiaux 265B.

La deuxième gorge circonférentielle 267C s'étend parallèlement à un plan radial orthogonal à l'axe X. Elle est ici disposée axialement en aval de la première gorge circonférentielle 265C.

Chaque deuxième conduit radial 267D a une extension radiale suivant une direction radiale orthogonale à l'axe X. Dans l'exemple représenté, chaque deuxième conduit radial 267D est en particulier rectiligne suivant une direction radiale. En variante (non représentée), au moins un deuxième conduit radial 267D est courbe et a également une extension axiale parallèlement à l'axe X et/ou une extension circonférentielle suivant une direction orthogonale à l'axe X et à la direction radiale.

Chaque deuxième conduit radial 267D est ici disposé axialement en aval des premiers conduits radiaux 265D.

Le deuxième canal d'alimentation 268 s'étend depuis une sortie des deuxièmes conduits radiaux 266D jusqu'à une entrée de la deuxième chambre fluidique 114. Dans l'exemple représenté, il est sensiblement rectiligne et s'étend sensiblement parallèlement à l'axe X.

Les premier et deuxième circuits 260, 261 sont des circuits indépendants, c'est-à-dire qu'ils ne sont pas en communication fluidique l'un avec l'autre.

Ici, le palier de transfert de fluide 257 est également configuré pour alimenter le vérin de contrebalancement 250 en fluide de commande provenant du système de pilotage 76. A cet effet, le palier de transfert de fluide 257 comprend un troisième circuit 269 indépendant des premier et deuxième circuits 260, 261.

Le troisième circuit 261 comprend un troisième conduit axial 270A ménagé dans le stator 258, une pluralité de troisièmes orifices radiaux 270B (un seul d'entre eux étant représenté ici) ménagés dans le stator 258 et reliant le conduit axial 270A à la périphérie du stator 258, une troisième gorge circonférentielle 270C ménagée entre le rotor 259 et le stator 258 et dans laquelle débouche chaque orifice radial 270B, et une pluralité de troisièmes conduits radiaux 270D, ménagés dans le rotor 259, s'étendant radialement depuis la gorge 270C jusqu'à un troisième canal 271 d'alimentation du vérin de contrebalancement 250, formé dans le bâti 72.

Le troisième conduit axial 270A a une extension axiale parallèlement à l'axe X. Avantageusement, il est coaxial au premier et au deuxième conduits axiaux 265A, 267A. Dans l'exemple représenté, il est en particulier rectiligne et coaxial à l'axe X. En variante (non représentée), le troisième conduit axial 270A est courbe et/ou a également une extension radiale suivant une direction orthogonale à l'axe X.

Par ailleurs, le troisième conduit axial 270A a, l'exemple représenté, une section radiale pleine. Ici, il s'étend au centre des premier et deuxième conduits axiaux 265A, 267A.

Chaque troisième orifice radial 270B a une extension radiale suivant une direction radiale orthogonale à l'axe X. Dans l'exemple représenté, chaque troisième orifice radial 270B est en particulier rectiligne suivant une direction radiale. En variante (non représentée), au moins un troisième orifice radial 270B est courbe et/ou a également une extension axiale parallèlement à l'axe X.

Chaque troisième orifice radial 270B est ici disposé axialement en amont des premiers et deuxièmes orifices radiaux 265B, 267B.

La troisième gorge circonférentielle 270C s'étend parallèlement à un plan radial orthogonal à l'axe X. Elle est ici disposée axialement en amont des première et deuxième gorges circonférentielles 265C, 267C.

Chaque troisième conduit radial 270D a une extension radiale suivant une direction radiale orthogonale à l'axe X. Dans l'exemple représenté, chaque troisième conduit radial 270D est en particulier rectiligne suivant une direction radiale. En variante (non représentée), au moins un troisième conduit radial 270D est courbe et a également une extension axiale parallèlement à l'axe X et/ou une extension circonférentielle suivant une direction orthogonale à l'axe X et à la direction radiale.

Chaque troisième conduit radial 270D est ici disposé axialement en amont des premiers et deuxièmes orifices radiaux 265D, 267D.

Le troisième canal d'alimentation 271 s'étend depuis une sortie des troisièmes conduits radiaux 266D jusqu'à une entrée de la chambre de contrebalancement 254. Dans l'exemple représenté, il comprend une portion axiale rectiligne s'étendant sensiblement parallèlement à l'axe X vers l'amont depuis la sortie des troisièmes conduits radiaux 266D jusqu'à une extrémité de ladite portion et une portion radiale rectiligne s'étendant sensiblement orthogonalement à l'axe X depuis l'extrémité amont de la portion axiale jusqu'à l'entrée de la chambre de contrebalancement 254.

De retour à la Figure 3, le palier de guidage 257 a un diamètre externe inférieur à un diamètre interne du palier de guidage 53 du rotor de soufflante 54. Il est disposé en amont du réducteur et est en particulier logé dans le logement 82 délimité par le socle 80.

Le palier de guidage 257 est ainsi entouré, au moins pour partie, par le vérin de commande 74. En particulier, le vérin de commande 74 s'étend suivant l'axe X autour de plus de la moitié, avantageusement autour de plus des trois-quarts, du palier de transfert de fluide 257. Pour arriver à cette mesure, on prend en considération les extrémités axiales du vérin de commande 74 et du palier de guidage 257, celles-ci étant définies comme suit :
- pour le vérin de commande 74, ses extrémités axiales sont constituées par les limites de course de la partie mobile 102 ;
- pour le palier de guidage 257, ses extrémité axiales sont constituées par les limites au-delà desquelles le rotor 259 et le stator 258 ne coexistent plus (c'est-à-dire que, partant du centre du palier de guidage, la première extrémité axiale du rotor 259 ou du stator 258 rencontrée délimite une extrémité axiale du palier de guidage 257).

Un procédé de changement du pas des aubes 56, mis en œuvre par le mécanisme de changement de pas 70 selon le premier mode de réalisation, va maintenant être décrit.

Lors d'une première étape de ce procédé, le module de commande 135 reçoit tout d'abord une instruction de calage visant à faire augmenter le pas des aubes 56. Le module de commande 135 transmet alors à l'unité de contrôle de pression 132 un signal de commande destiné à augmenter la pression de fluide dans la première chambre 112. La pression de fluide dans la première chambre 112 augmentant, la partie mobile 102 du vérin 74 se déplace dans le deuxième sens, vers sa position déployée, ce qui, par l'intermédiaire du système de liaison 78, entraîne le pivotement des aubes 56 vers les grands pas (c'est-à-dire vers la position drapeau).

Une fois la partie mobile 102 arrivée dans une position d'équilibre, elle se stabilise, les aubes 56 conservant une orientation fixe.

Lors d'une deuxième étape du procédé de changement de pas, le module de commande 135 reçoit tout d'abord une instruction de calage visant à faire réduire le pas des aubes 56. Le module de commande 135 transmet alors à l'unité de contrôle de pression 132 un signal de commande destiné à augmenter la pression de fluide dans la deuxième chambre 114. La pression de fluide dans la deuxième chambre 114 augmentant, la partie mobile 102 du vérin 74 se déplace dans le premier sens vers sa position rétractée, ce qui, par l'intermédiaire du système de liaison 78, entraîne le pivotement des aubes 56 vers les petits pas (c'est-à-dire vers la position voile).

Une fois la partie mobile 102 arrivée dans une position d'équilibre, elle se stabilise, les aubes 56 conservant une orientation fixe.

Optionnellement, le procédé de changement de pas comprend également, suite à la première ou à la deuxième étape, une étape de verrouillage commandé de l'orientation des aubes 56.

Lors de cette étape, le module de commande 135 transmet à l'unité de contrôle de pression 132 une commande de verrouillage de pas. Sous l'effet de cette commande, l'unité de contrôle de pression 132 raccorde fluidiquement le circuit de connexion fluidique 256 à la ligne de retour 136, entraînant une baisse de la pression de fluide dans la chambre de contrebalancement 254. La pression de fluide dans ladite chambre 254 est alors insuffisante pour contrebalancer la sollicitation du dispositif de rappel 240, qui ainsi entraîne le déplacement de l'organe de support 162 vers sa position de verrouillage.

Lors de ce déplacement, la vis 176, tout en se translatant, tourne autour de l'axe longitudinal X sous l'effet de la résistance imposée par l'ensemble de l'écrou 178 et des rouleaux 194 (lesquels sont maintenus immobiles en translation par le vérin de commande 74) jusqu'à ce que sa surface de butée 186 vienne en appui contre le butoir 92 du bâti 72, bloquant la rotation de la vis 176 autour de l'axe longitudinal X et sa translation suivant le même axe X.

Les aubes 56 sont ainsi bloquées dans leur orientation même en cas de perte de pression fluidique dans la première chambre 112.

En cas de perte de pression dans la deuxième chambre 114 uniquement, la partie mobile 102 du vérin 74 est déplacée dans le deuxième sens sous l'effet de la différence de pression entre les deux chambres 112, 114, entraînant avec elle la vis 176 et l'organe de support 162, qui retrouve sa position de fonctionnement. La partie mobile 102 n'est donc plus immobilisée et peut continuer de se déplacer dans le deuxième sens jusqu'à ce que les aubes 56 se retrouvent en position drapeau.

En cas de dysfonctionnement du système de pilotage 76, typiquement en cas de panne du générateur de pression 130, le procédé de changement de pas comprend une étape supplémentaire de verrouillage non-commandé de l'orientation des aubes 56.

Lors de cette étape, le dysfonctionnement du système de pilotage 76 entraîne une baisse de la pression de fluide dans la chambre de contrebalancement 254, typiquement parce que le générateur de pression 130 n'est plus en mesure de porter le fluide de commande à la troisième pression. La pression de fluide dans ladite chambre 254 est alors insuffisante pour contrebalancer la sollicitation du dispositif de rappel 240, qui ainsi entraîne le déplacement de l'organe de support 162 vers sa position de verrouillage.

Lors de ce déplacement, la vis 176 entraîne avec elle l'écrou 178 et les rouleaux 194, lesquels ne sont plus maintenus immobiles en translation du fait de la perte d'alimentation du vérin de commande 74. Les aubes 56 pivotent donc légèrement vers les petits pas, jusqu'à ce que la surface de butée 186 de la vis 176 vienne en appui contre le butoir 92 du bâti 72, bloquant la rotation de la vis 176 autour de l'axe longitudinal X et sa translation suivant le même axe X.

Le pivotement des aubes 56 vers les petits pas est alors empêché par le dispositif de verrouillage 160.

L'étape de verrouillage non-commandé est suivie d'une étape de mise en sécurité de la soufflante 50. Lors de cette étape, le circuit de secours 134 est activé et alimente la première chambre fluidique 112 en fluide de commande de manière augmenter la pression fluidique dans cette chambre. Sous l'effet de cette augmentation de pression, la partie mobile 102 se déplace dans le deuxième sens, entraînant avec elle la vis 176 et l'organe de support 162, qui retrouve sa position de fonctionnement. La partie mobile 102 n'est donc plus immobilisée et peut continuer de se déplacer vers l'aval jusqu'à ce que les aubes 56 se retrouvent en position drapeau.

On notera que ces différentes étapes peuvent être mises en œuvre indépendamment les unes des autres.

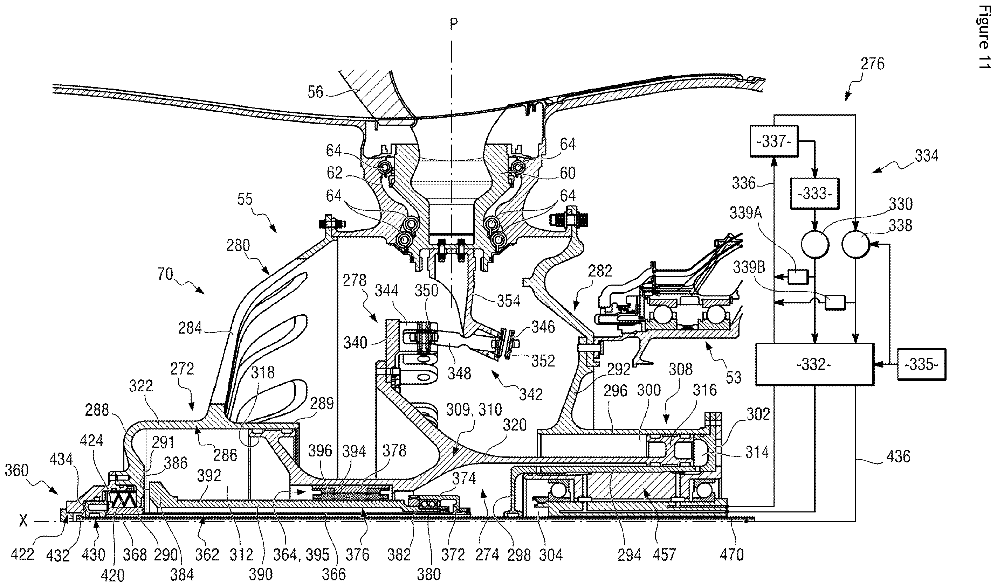

Un deuxième mode de réalisation du mécanisme de changement de pas 70 va maintenant être décrit, en référence à la Figure 11.

Dans ce mode de réalisation, le mécanisme de changement de pas 70 comprend un bâti 272, un vérin de commande 274, un système 276 de pilotage du vérin 274 et un système de liaison 278.

Le bâti 272 est solidaire du moyeu 55 et est typiquement constitué par une partie du moyeu 55. Il est ainsi fixe relativement aux axes de pivotement P.

Dans l'exemple représenté, le bâti 272 comprend un ensemble amont 280 et un ensemble aval 282 espacés l'un de l'autre suivant l'axe longitudinal X. Chacun de ces ensembles 280, 282 est centré sur l'axe longitudinal X et s'étend depuis l'axe longitudinal X jusqu'au logement 62, l'ensemble amont 280 étant disposé en amont du logement 62 et l'ensemble aval 282 étant disposé en aval du logement 62.

L'ensemble amont 280 est en particulier formé par un flasque amont 284 en forme générale de dôme logeant en son centre un cylindre borgne 286. Le cylindre borgne 286 est fermé à son extrémité amont 288 et ouvert à son extrémité aval 289. Il fait saillie vers l'amont relativement au flasque 284.

L'ensemble amont 280 présente en son centre un orifice 290 débouchant vers l'aval. Cet orifice 290 est en particulier ménagé dans l'extrémité amont 288 du cylindre borgne 286. L'ensemble amont 280 présente également un butoir 291 orienté vers l'aval. Ce butoir 291 est ici formé dans la face aval de l'extrémité amont 288 du cylindre borgne 286. Il s'étend sensiblement radialement et est en particulier agencé autour de l'orifice 290.

Ici, l'ensemble aval 282 comprend un flasque aval 292 logeant en son centre deux cylindres concentriques 294, 296 : un cylindre central 294, fermé à son extrémité amont 298, et un cylindre périphérique 296 entourant le cylindre central 294 et délimitant avec le cylindre central 294 une cavité périphérique 300 fermée à son extrémité aval 302. Le cylindre central 294 définit un logement 304.

Le vérin de commande 274 comporte une partie fixe 308, solidaire du bâti 72, et une partie mobile 309 mobile en translation suivant l'axe longitudinal X relativement à la partie fixe 308 entre une position rétractée, représentée sur la Figure 11, et une position déployée représentée (non représentée). Optionnellement, la partie mobile 309 est également mobile en rotation autour de l'axe longitudinal X sur un angle restreint, par exemple de l'ordre de 5°.

Le vérin de commande 274 comprend en particulier un piston 310 formant la partie mobile 309.

Le vérin de commande 274 comprend également une première chambre fluidique 312 et une deuxième chambre fluidique 314 chacune délimitée entre le piston de commande 310 et le bâti 272. Lesdites chambres fluidiques 312, 314 contiennent chacune un fluide de commande, typiquement constitué par une huile, qui est à une première pression dans la première chambre fluidique 312 et à une deuxième pression dans la deuxième chambre fluidique 314. Les première et deuxième chambres fluidiques 312, 314 sont agencées de sorte que l'augmentation relative de la première pression (c'est-à-dire relativement à la deuxième pression) entraîne le déplacement du piston 310 vers sa position rétractée, l'augmentation relative de la deuxième pression (c'est-à-dire relativement à la première pression) entraînant le déplacement du piston 310 vers sa position déployée.

Dans l'exemple représenté, le piston 310 comprend une bague d'étanchéité et de guidage aval 316, une bague d'étanchéité et de guidage amont 318 et un corps cylindrique 320 s'étendant de la bague d'étanchéité et de guidage aval 316 à la bague d'étanchéité et de guidage amont 318. La bague d'étanchéité et de guidage aval 316 est logée dans la cavité périphérique 300 et s'étend depuis le cylindre central 294 jusqu'au cylindre périphérique 296 en formant une étanchéité avec chacun de ces cylindres 294, 296. La bague d'étanchéité et de guidage amont 318 est logée dans le cylindre borgne 286 et forme une étanchéité avec la paroi périphérique 322 du cylindre borgne 286. La première chambre fluidique 312 est ainsi délimitée à son extrémité aval par la bague d'étanchéité et de guidage aval 316, à son extrémité amont par l'extrémité amont 288 du cylindre borgne 286, et à sa périphérie par le corps 320 du piston 310 et par la paroi périphérique 322 du cylindre borgne 286. La deuxième chambre fluidique 314, quant à elle, est constituée par la portion de la cavité périphérique 300 comprise entre la bague d'étanchéité et de guidage aval 316 et l'extrémité aval 302 de ladite cavité périphérique 300.

Le système de pilotage 276 comprend un générateur de pression 330 pour porter le fluide de commande à une troisième pression supérieure aux première et deuxième pressions, une unité de contrôle de pression 332 pour ajuster la pression du fluide de commande dans les première et deuxième chambres fluidiques 312, 314 au moyen de la troisième pression, et une ligne de retour 336 pour évacuer le fluide de commande dépressurisé. Le système de pilotage 276 comprend également un réservoir principal 333, un circuit de secours 334 et un module de commande 335.

Le générateur de pression 330 comprend par exemple une pompe apte à pomper le fluide pour le porter à la troisième pression, par exemple 100 bars. Une soupape de surpression principale 339A permet d'évacuer une partie du fluide de commande vers la ligne de retour 336 lorsque la pression du fluide de commande en aval du générateur de pression 330 excède la troisième pression.

L'unité de contrôle de pression 332 est alimentée en fluide de commande à la troisième pression par le générateur de pression 330. Elle est raccordée fluidiquement à la première chambre fluidique 312 et à la deuxième chambre fluidique 314. Elle est apte à répartir le fluide de commande entre la première chambre fluidique 312 et la deuxième chambre fluidique 314 de manière à ajuster la pression de fluide à l'intérieur de chacune de ces chambres 312, 314 et, ainsi, ajuster la position du piston 310 entre ses positions rétractée et déployée. Elle est également apte à évacuer du fluide de commande provenant des première et deuxième chambres fluidiques 312, 314 dans la ligne de retour 336.

Le réservoir principal 333 est configuré pour collecter du fluide de commande dépressurisé provenant de la ligne de retour 336. Il alimente le générateur de pression 330.

Le circuit de secours 334 est apte à alimenter la deuxième chambre fluidique 314 en fluide de commande de manière à déplacer le piston 310 vers sa position rétractée en cas de défaillance du générateur de pression 330. A cet effet, le circuit de secours 334 comprend un réservoir auxiliaire 337 et une pompe auxiliaire 338. Dans l'exemple représenté il comprend également une soupape de surpression auxiliaire 339B.

Le réservoir auxiliaire 337 est configuré pour collecter du fluide de commande dépressurisé provenant de la ligne de retour 336. Il alimente la pompe auxiliaire 338. Dans l'exemple représenté, il alimente également le réservoir principal 333, le fluide de commande dépressurisé provenant de la ligne de retour 336 transitant par le réservoir auxiliaire 337 avant d'atteindre le réservoir principal 333.

La pompe auxiliaire 338 est apte à pomper le fluide de commande dans le réservoir auxiliaire 337 pour le porter à la troisième pression. Elle est raccordée fluidiquement à l'unité de contrôle de pression 332 de manière à l'alimenter en fluide de commande à la troisième pression, l'unité de contrôle de pression 332 étant configurée pour rediriger l'intégralité du fluide de commande provenant de la pompe auxiliaire 338 vers la deuxième chambre fluidique 314.

La soupape de surpression 339B est apte à évacuer une partie du fluide de commande vers la ligne de retour 336 lorsque la pression du fluide de commande en aval de la pompe auxiliaire 338 excède la troisième pression.

Le module de commande 335 est configuré pour recevoir une instruction de calage (non représentée) et en déduire un signal de commande transmis à l'unité de contrôle de pression 332. En particulier, le module de commande 335 est configuré pour transmettre à l'unité de contrôle de pression 332 un signal de commande destiné à augmenter la pression de fluide dans la deuxième chambre 314 lorsque l'instruction de calage vise à faire augmenter le pas des aubes 56, et pour transmettre à l'unité de contrôle de pression 332 un signal de commande destiné à augmenter la pression de fluide dans la première chambre 312 lorsque l'instruction de calage vise à faire réduire le pas des aubes 56.

Le module de commande 335 est également configuré pour transmettre au circuit de secours 334, plus particulièrement à sa pompe auxiliaire 338, une instruction de démarrage en cas de défaillance du générateur de pression 330.

Le système de liaison 278 relie le piston 310 à chaque aube 56 de sorte à convertir la translation du piston 310 suivant l'axe longitudinal X et, le cas échéant, la rotation du piston 310 autour de l'axe longitudinal X en une rotation de chaque aube 56 autour de son axe de pivotement P.

A cet effet, le système de liaison 278 comprend une couronne de synchronisation 340 solidaire du piston 310 et, pour chacune des aubes 56, un mécanisme 342 de liaison de l'aube 56 à la couronne de synchronisation 340.

La couronne de synchronisation 340 s'étend dans un plan radial autour du piston 310.

Chaque mécanisme de liaison 342 comprend une première articulation 344 solidaire du piston 310, une deuxième articulation 346 solidaire de l'aube 56, à l'écart de l'axe de pivotement P de ladite aube 56, et une bielle 348 reliant la première articulation 344 à la deuxième articulation 346.

La première articulation 344 est portée par la couronne de synchronisation 340. Elle est ici constituée par une liaison rotule.

La deuxième articulation 346 est également constituée par une liaison rotule. Elle est excentrée relativement à l'axe de pivotement P.

La bielle 348 présente une première extrémité 350 articulée à la première articulation 344 et une deuxième extrémité 352 articulée à la deuxième articulation 346. Avantageusement la bielle 348 est de longueur réglable, c'est-à-dire que la distance entre les première et deuxième extrémités 350, 352 peut être modifiée, ce qui permet d'ajuster précisément le pilotage de l'angle de calage de chaque aube 56 par le mécanisme de changement de pas 70.

Dans l'exemple représenté chaque mécanisme de liaison 342 comprend également une pièce à excentrique 354 reliant la pièce d'attache 60 à la deuxième articulation 346.

Le système de liaison 278 est agencé de sorte que le déplacement du piston 310 vers le butoir 291, c'est-à-dire vers sa position déployée, entraîne une rotation de chaque aube 56 vers sa position voile, et que le déplacement du piston 310 à l'écart du butoir 291, c'est à dire vers sa position rétractée, entraîne une rotation de chaque aube 56 vers sa position drapeau. A cet effet, la deuxième articulation 346 est placée, relativement au plan Q orthogonal à la corde C et contenant l'axe de pivotement P, du côté du bord de fuite 57B, c'est-à-dire à l'opposé, relativement à l'axe de pivotement P, de la position occupée par la deuxième articulation 146 dans le mode de réalisation des Figures 4 à 10.

On notera que, dans l'exemple représenté sur la Figure 11, la première articulation 344 est disposée à l'amont de la deuxième articulation 346. Cela a pour conséquence que, lorsque le mécanisme de changement de pas 70 est immobilisé, les sollicitations naturelles de l'aube 56 vers sa position voile font travailler l'organe de liaison 348 en compression, impliquant un risque de flambage dudit organe de liaison 348. Pour éviter ce risque de flambage de l'organe de liaison 348 et pouvoir utiliser un organe de liaison 348 plus léger, on préférera donc une variante (non représentée) dans laquelle la première articulation 344 est disposée à l'aval de la deuxième articulation 346. Cet agencement particulier permet en effet, comme celui du premier mode de réalisation, que les sollicitations naturelles de l'aube 56 vers sa position voile fassent travailler l'organe de liaison 348 en traction et non en compression lorsque le mécanisme de changement de pas 70 est immobilisé.

Le mécanisme de changement de pas 70 comprend encore un dispositif de verrouillage de pas 360 propre à bloquer la translation du piston 310 relativement au bâti 272 vers sa position déployée.

Ce dispositif de verrouillage 360 comprend un organe de support 362 et un système vis-écrou 364.

L'organe de support 362 est mobile en translation relativement au bâti 272 suivant l'axe longitudinal X entre une position de fonctionnement, représentée sur la Figure 11, et une position de verrouillage (non représentée).

L'organe de support 362 comprend un corps 366 allongé suivant l'axe longitudinal X et centré sur l'axe longitudinal X. Ledit corps 366 présente une première extrémité longitudinale 368, en particulier une extrémité longitudinale amont, engagée à travers l'orifice 290 du bâti 272, et une deuxième extrémité longitudinale 372 libre. Par ailleurs, dans l'exemple représenté le corps 366 est creux et est ouvert à ses deux extrémités longitudinales 368, 372.

L'organe de support 362 comprend également une jupe 374 solidaire du corps 366 et agencée autour de la deuxième extrémité longitudinale 372 du corps 366.

Le système vis-écrou 364 comprend une vis 376 et un écrou 378.

La vis 376 s'étend autour du corps 366 de l'organe de support 362 et est coaxiale audit corps 366. Elle est solidaire en translation de l'organe de support 362 et montée mobile en rotation autour de l'axe longitudinal X relativement à l'organe de support 362. A cet effet, la vis 376 est assemblée à l'organe de support 362 par l'intermédiaire d'un palier 380. Ce palier 380 est ici interposé entre la jupe 374 de l'organe de support 362 et une portion d'extrémité 382 de la vis 376, logée entre le corps 366 et la jupe 374.

La vis 376 présente une deuxième portion d'extrémité longitudinale 384 opposée à la portion d'extrémité 382. Cette deuxième portion d'extrémité longitudinale 384 définit une surface de butée 386 radiale. Cette surface de butée 386 est à distance du bâti 272 lorsque l'organe de support 362 est en position de fonctionnement et en appui contre le butoir 291 du bâti 272 lorsque l'organe de support 362 est en position de verrouillage.

Ici, la deuxième portion d'extrémité longitudinale 384 s'évase depuis un corps fileté 390 de la vis 376 jusqu'à la surface de butée 386. Ainsi, la surface de contact entre la surface de butée 386 et le butoir 291 est augmentée, ce qui accroit les forces de frottement entre la surface de butée 386 et le butoir 291 et permet une meilleure transmission des efforts de freinage et de blocage.

La surface de butée 386 et le butoir 291 sont ici chacun lisses. En variante (non représentée), la surface de butée 386 et/ou le butoir 291 présente(nt) des aspérités, de manière à accroitre encore davantage les forces de frottement entre la surface de butée 386 et le butoir 291 et permettre une transmission des efforts encore accrue.

Le corps fileté 390 s'étend de l'une à l'autre des portions d'extrémité 382, 384. Il présente un filetage externe 392 à sa périphérie.

L'écrou 378 est solidaire du piston 310 et coaxial à la vis 376. Il coopère avec la vis 376 de sorte qu'une translation de l'écrou 378 suivant l'axe longitudinal X relativement à la vis 376 entraîne la rotation de la vis 376 autour de l'axe longitudinal X relativement à l'organe de support 362.

L'écrou 378 présente un taraudage interne 394.

Le système vis-écrou 364 est en particulier formé par un système de vis à rouleaux satellites 395 réversible. De manière classique, ce système de vis à rouleaux satellites 395 comprend, outre la vis 376 et l'écrou 378, une pluralité de rouleaux 396 interposés entre la vis 376 et l'écrou 378, chaque rouleau 396 étant allongé parallèlement à l'axe longitudinal X.

De préférence, la description donnée ci-dessus du système de vis à rouleaux satellites 195 s'applique *mutatis mutandis* au système de vis à rouleaux satellites 395.

Cette caractéristique permet une bonne transmission des efforts de l'écrou 378 à la vis 376 par le système vis-écrou 364, tout en conservant un petit pas dans la liaison hélicoïdale du système vis-écrou 364. En particulier, en cas de blocage de la rotation de la vis 376, elle permet d'immobiliser l'écrou 378 relativement à la vis 376 même en l'absence d'écrou de verrouillage distinct. Il est ainsi possible de d'affranchir de l'usage d'un écrou de verrouillage distinct, ce qui simplifie la fabrication et réduit les coûts du mécanisme, tout en augmentant sa fiabilité et minimisant sa masse.

Le dispositif de verrouillage 360 comprend également un dispositif de rappel 420 sollicitant l'organe de support 362 vers sa position de verrouillage et un dispositif de maintien 422 pour maintenir l'organe de support 362 dans sa position de fonctionnement lorsque le mécanisme de changement de pas 70 est en conditions normales de fonctionnement.

Le dispositif de rappel 420 est ici constitué par un ressort de compression comprimé entre le bâti 272 et un épaulement 424 solidaire de l'organe de support 362.

Le dispositif de maintien 422 comprend un vérin de contrebalancement 430 comportant un piston de contrebalancement 432 et une chambre de contrebalancement 434.

Le piston de contrebalancement 432 est solidaire de l'organe de support 362. Il est monté mobile en translation suivant l'axe longitudinal X relativement au bâti 272. Il est en particulier coaxial à l'organe de support 362. Dans l'exemple représenté, il est agencé dans le prolongement longitudinal de l'organe de support 362.

Le piston de contrebalancement 432 et le bâti 272 délimitent ensemble la chambre 434.

La chambre de contrebalancement 434 est raccordée fluidiquement au générateur de pression 330 par un circuit de connexion fluidique 436 de sorte à être alimentée en fluide de commande à la troisième pression. Elle est destinée à contrebalancer la sollicitation du dispositif de rappel 420 lorsque cette alimentation est active.

A cet effet, le vérin de contrebalancement 430 est agencé de sorte que la pression exercée sur le piston 432 par le fluide contenu dans la chambre 434 soit orientée dans une direction opposée à celle de la sollicitation du dispositif de rappel 420 : dans l'exemple représenté, le piston de contrebalancement 432 est interposé entre la chambre 434 et l'épaulement 424 et l'épaulement 424 est interposé entre le piston 432 et le dispositif de rappel 420. De plus, le piston de contrebalancement 432 et la chambre de contrebalancement 434 sont dimensionnés de sorte que, lorsque la chambre 434 est alimentée en fluide de commande à la troisième pression, la force exercée par le fluide de commande sur le piston 432 soit supérieure à la sollicitation du dispositif de rappel 420.

Ainsi, lorsque l'alimentation de la chambre 434 en fluide de commande à la troisième pression est active, la sollicitation du dispositif de rappel 420 est annulée et l'organe de support 362 maintenu en position de fonctionnement.

Dans l'exemple représenté, l'unité de contrôle de pression 332 est interposée fluidiquement entre le générateur de pression 330 et le circuit de connexion fluidique 436. Elle présente une première configuration, dans laquelle elle isole le circuit de connexion fluidique 436 de la ligne de retour 336, et une deuxième configuration, dans laquelle elle raccorde fluidiquement le circuit de connexion fluidique 436 à la ligne de retour 336.

L'unité de contrôle de pression 332 est configurée pour être normalement dans sa première configuration et pour basculer dans sa deuxième configuration sur réception d'une instruction de commande transmise par le module de commande 335.

Toujours en référence à la Figure 11, le mécanisme de changement de pas 70 comprend enfin un palier de transfert de fluide 457 destiné à l'alimentation du vérin de commande 274 en fluide de commande provenant du système de pilotage 276.

A cet effet, le palier de transfert de fluide 457 est configuré pour transférer le fluide de commande provenant du repère fixe attaché à la nacelle 20 au repère tournant attaché au rotor de soufflante 54 et plus particulièrement aux première et deuxième chambres 312, 314 du vérin 274.

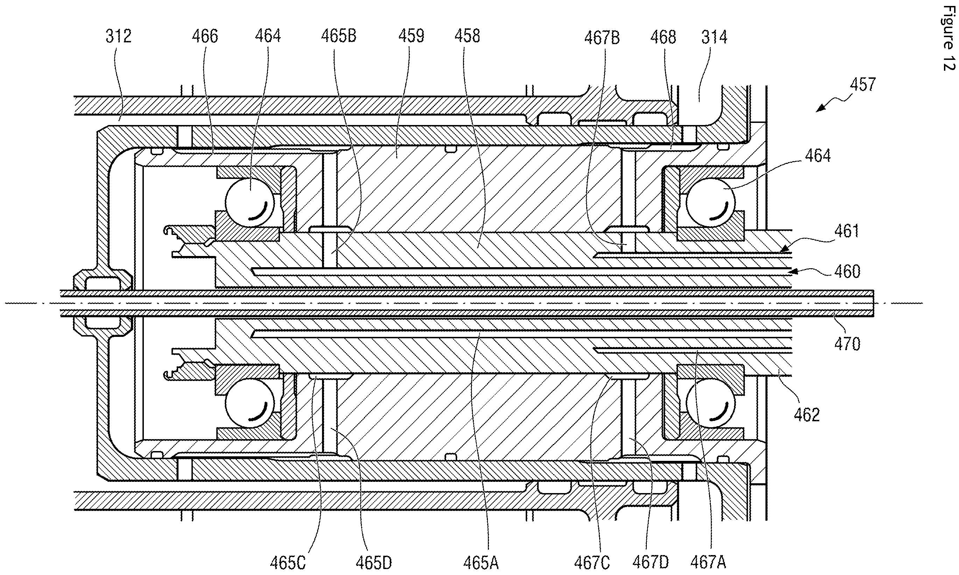

Pour cela, le palier de transfert de fluide 457 comprend, en référence à la Figure 12, un stator 458 fixe par rapport à la nacelle 20 et un rotor 459 mobile conjointement avec le rotor de soufflante 54 (et donc avec le vérin de commande 274) autour de l'axe longitudinal X relativement au stator 458. Il comprend également un premier circuit 460 raccordé fluidiquement à la première chambre fluidique 312 pour l'alimentation de ladite première chambre fluidique 312 en fluide de commande fourni par le système de pilotage 276 et un deuxième circuit 461 raccordé fluidiquement à la deuxième chambre fluidique 314 pour l'alimentation de ladite deuxième chambre fluidique 114 en fluide de commande fourni par le système de pilotage 76.

Le stator 458 est en forme de cylindre de révolution coaxial à l'axe longitudinal X. Il est relié par son extrémité aval 462 à une structure (non représentée) de la nacelle 20.

Le rotor 459 est en forme de cylindre de révolution coaxial à l'axe longitudinal X. Il s'étend autour du stator 458. Sa périphérie est en contact avec le bâti 272. Il est guidé en rotation autour de l'axe X par rapport au stator 458 par l'intermédiaire de roulements 464 interposés entre le rotor 459 et le stator 458.

Le palier de transfert de fluide 457 est ainsi coaxial à l'axe X. Il est donc également coaxial au vérin de commande 274.

Le premier circuit 460 comprend un premier conduit axial 465A ménagé dans le stator 458, une pluralité de premiers orifices radiaux 465B (un seul d'entre eux étant représenté ici) ménagés dans le stator 458 et reliant le conduit axial 465A à la périphérie du stator 458, une première gorge circonférentielle 465C ménagée entre le rotor 459 et le stator 458 et dans laquelle débouche chaque orifice radial 465B, et une pluralité de premiers conduits radiaux 465D, ménagés dans le rotor 459, s'étendant radialement depuis la gorge 465C jusqu'à un premier canal 466 d'alimentation de la première chambre fluidique 112 formé entre le bâti 72 et le rotor 459.

Le premier conduit axial 465A a une extension axiale parallèlement à l'axe X. Dans l'exemple représenté, il est en particulier rectiligne et coaxial à l'axe X. En variante (non représentée), le premier conduit axial 465A est courbe et/ou a également une extension radiale suivant une direction orthogonale à l'axe X.

Par ailleurs, le premier conduit axial 465A a, l'exemple représenté, une section radiale annulaire, c'est-à-dire qu'il est plein en son centre.

Chaque premier orifice radial 465B a une extension radiale suivant une direction radiale orthogonale à l'axe X. Dans l'exemple représenté, chaque premier orifice radial 465B est en particulier rectiligne suivant une direction radiale. En variante (non représentée), au moins un premier orifice radial 465B est courbe et/ou a également une extension axiale parallèlement à l'axe X.

La première gorge circonférentielle 465C s'étend parallèlement à un plan radial orthogonal à l'axe X.

Chaque premier conduit radial 465D a une extension radiale suivant une direction radiale orthogonale à l'axe X. Dans l'exemple représenté, chaque premier conduit radial 465D est en particulier rectiligne suivant une direction radiale. En variante (non représentée), au moins un premier conduit radial 465D est courbe et a également une extension axiale parallèlement à l'axe X et/ou une extension circonférentielle suivant une direction orthogonale à l'axe X et à la direction radiale.

Le premier canal d'alimentation 466 s'étend depuis une sortie des premiers conduits radiaux 465D jusqu'à une entrée de la première chambre fluidique 312. Dans l'exemple représenté, il est sensiblement rectiligne et s'étend sensiblement parallèlement à l'axe X.

Le deuxième circuit 461 comprend un deuxième conduit axial 467A ménagé dans le stator 458, une pluralité de deuxièmes orifices radiaux 467B (un seul d'entre eux étant représenté ici) ménagés dans le stator 458 et reliant le conduit axial 467A à la périphérie du stator 458, une deuxième gorge circonférentielle 467C ménagée entre le rotor 459 et le stator 458 et dans laquelle débouche chaque orifice radial 467B, et une pluralité de deuxièmes conduits radiaux 467D, ménagés dans le rotor 459, s'étendant radialement depuis la gorge 467C jusqu'à un deuxième canal 468 d'alimentation de la deuxième chambre fluidique 114 formé entre le bâti 72 et le rotor 459.

Le deuxième conduit axial 467A a une extension axiale parallèlement à l'axe X. Avantageusement, il est coaxial au premier conduit axial 465A. Dans l'exemple représenté, il est en particulier rectiligne et coaxial à l'axe X. En variante (non représentée), le deuxième conduit axial 467A est courbe et/ou a également une extension radiale suivant une direction orthogonale à l'axe X.

Par ailleurs, le deuxième conduit axial 467A a, l'exemple représenté, une section radiale annulaire, c'est-à-dire qu'il est plein en son centre. Ici, il s'étend autour du premier conduit axial 465A.

Chaque deuxième orifice radial 467B a une extension radiale suivant une direction radiale orthogonale à l'axe X. Dans l'exemple représenté, chaque deuxième orifice radial 467B est en particulier rectiligne suivant une direction radiale. En variante (non représentée), au moins un deuxième orifice radial 467B est courbe et/ou a également une extension axiale parallèlement à l'axe X.

Chaque deuxième orifice radial 467B est ici disposé axialement en aval des premiers orifices radiaux 465B.

La deuxième gorge circonférentielle 467C s'étend parallèlement à un plan radial orthogonal à l'axe X. Elle est ici disposée axialement en aval de la première gorge circonférentielle 465C.

Chaque deuxième conduit radial 467D a une extension radiale suivant une direction radiale orthogonale à l'axe X. Dans l'exemple représenté, chaque deuxième conduit radial 467D est en particulier rectiligne suivant une direction radiale. En variante (non représentée), au moins un deuxième conduit radial 467D est courbe et a également une extension axiale parallèlement à l'axe X et/ou une extension circonférentielle suivant une direction orthogonale à l'axe X et à la direction radiale.

Chaque deuxième conduit radial 467D est ici disposé axialement en aval des premiers conduits radiaux 465D.

Le deuxième canal d'alimentation 468 s'étend depuis une sortie des deuxièmes conduits radiaux 466D jusqu'à une entrée de la deuxième chambre fluidique 314. Dans l'exemple représenté, il est sensiblement rectiligne et s'étend sensiblement parallèlement à l'axe X.

Les premier et deuxième circuits 460, 461 sont des circuits indépendants, c'est-à-dire qu'ils ne sont pas en communication fluidique l'un avec l'autre.

De retour à la Figure 11, le palier de guidage 457 a un diamètre externe inférieur à un diamètre interne du palier de guidage 53 du rotor de soufflante 54. Il est disposé en amont du réducteur et est en particulier logé dans le logement 304 délimité par le cylindre central 294.

Le palier de guidage 457 est ainsi entouré, au moins pour partie, par le vérin de commande 274. En particulier, le vérin de commande 274 s'étend suivant l'axe X autour de plus de la moitié, avantageusement autour de plus des trois-quarts, du palier de transfert de fluide 457. Pour arriver à cette mesure, on prend en considération les extrémités axiales du vérin de commande 274 et du palier de guidage 457, celles-ci étant définies comme suit :
- pour le vérin de commande 274, ses extrémités axiales sont constituées par les extrémités 288, 302 des chambres fluidiques 312, 314 ;
- pour le palier de guidage 457, ses extrémité axiales sont constituées par les limites au-delà desquelles le rotor 459 et le stator 458 ne coexistent plus (c'est-à-dire que, partant du centre du palier de guidage, la première extrémité axiale du rotor 459 ou du stator 458 rencontrée délimite une extrémité axiale du palier de guidage 457).

En particulier, dans l'exemple représenté, le vérin de commande 274 s'étend suivant l'axe X autour de la totalité du palier de transfert de fluide 457.

A la différence du palier de transfert de fluide 257, le palier de transfert de fluide 457 n'est ici pas configuré pour alimenter le vérin de contrebalancement 430 en fluide de commande provenant du système de pilotage 276. A la place, le stator 458 est percé axialement en son centre et traversé par une conduite centrale 470 destinée à l'alimentation du vérin de contrebalancement 430.

Cette conduite centrale 470 est ici rectiligne et colinéaire à l'axe longitudinal X. Elle s'étend à travers le palier de transfert de fluide 257, mais aussi à travers l'organe de support 362 et le piston de contrebalancement 432, jusqu'à la chambre de contrebalancement 434.

La conduite centrale 470 est typiquement fixe dans le repère de la nacelle 20. En variante, elle est fixe dans le repère tournant du rotor de soufflante 54.

Une étanchéité est réalisée à la périphérie de la conduite centrale 470, entre la conduite centrale 470 et le piston de contrebalancement 432. Avantageusement, une deuxième étanchéité est également réalisée à la périphérie de la conduite centrale 470, entre la conduite centrale 470 et l'extrémité amont 298 du cylindre central 294, que la conduite centrale 470 traverse en son centre.

Un procédé de changement du pas des aubes 56, mis en œuvre par le mécanisme de changement de pas 70 selon le deuxième mode de réalisation, va maintenant être décrit.

Lors d'une première étape de ce procédé, le module de commande 335 reçoit tout d'abord une instruction de calage visant à faire augmenter le pas des aubes 56. Le module de commande 335 transmet alors à l'unité de contrôle de pression 332 un signal de commande destiné à augmenter la pression de fluide dans la première chambre 312. La pression de fluide dans la première chambre 312 augmentant, le piston de commande 310 se déplace vers sa position rétractée, ce qui, par l'intermédiaire du système de liaison 278, entraîne le pivotement des aubes 56 vers les grands pas (c'est-à-dire vers la position drapeau).

Une fois le piston 310 arrivé dans une position d'équilibre, il se stabilise, les aubes 56 conservant une orientation fixe.

Lors d'une deuxième étape du procédé de changement de pas, le module de commande 335 reçoit tout d'abord une instruction de calage visant à faire réduire le pas des aubes 56. Le module de commande 335 transmet alors à l'unité de contrôle de pression 332 un signal de commande destiné à augmenter la pression de fluide dans la deuxième chambre 314. La pression de fluide dans la deuxième chambre 314 augmentant, le piston de commande 310 se déplace vers sa position déployée, ce qui, par l'intermédiaire du système de liaison 278, entraîne le pivotement des aubes 56 vers les petits pas (c'est-à-dire vers la position voile).

Une fois le piston 310 arrivé dans une position d'équilibre, il se stabilise, les aubes 56 conservant une orientation fixe.

Optionnellement, le procédé de changement de pas comprend également, suite à la première ou à la deuxième étape, une étape de verrouillage commandé de l'orientation des aubes 56.

Lors de cette étape, le module de commande 335 transmet à l'unité de contrôle de pression 332 une commande de verrouillage de pas. Sous l'effet de cette commande, l'unité de contrôle de pression 332 raccorde fluidiquement le circuit de connexion fluidique 436 à la ligne de retour 336, entraînant une baisse de la pression de fluide dans la chambre de contrebalancement 434. La pression de fluide dans ladite chambre 434 est alors insuffisante pour contrebalancer la sollicitation du dispositif de rappel 420, qui ainsi entraîne le déplacement de l'organe de support 362 vers sa position de verrouillage.

Lors de ce déplacement, la vis 376 tourne autour de l'axe longitudinal X sous l'effet de la résistance imposée par l'ensemble de l'écrou 378 et des rouleaux 394 (lesquels sont maintenus immobiles en translation par le vérin de commande 274) jusqu'à ce que sa surface de butée 386 vienne en appui contre le butoir 291 du bâti 272, bloquant la rotation de la vis 376 autour de l'axe longitudinal X et sa translation suivant le même axe X.

Les aubes 56 sont ainsi bloquées dans leur orientation même en cas de perte de pression fluidique dans la première chambre 312.

En cas de perte de pression dans la deuxième chambre 314 uniquement, le piston 310 est déplacé vers sa position rétractée sous l'effet de la différence de pression entre les deux chambres 312, 314, entraînant avec lui la vis 376 et l'organe de support 362, qui retrouve sa position de fonctionnement. Le piston 310 n'est donc plus immobilisé et peut continuer de se déplacer vers sa position rétractée jusqu'à ce que les aubes 56 se retrouvent en position drapeau.

En cas de dysfonctionnement du système de pilotage 276, typiquement en cas de panne du générateur de pression 330, le procédé de changement de pas comprend une étape supplémentaire de verrouillage non-commandé de l'orientation des aubes 56.

Lors de cette étape, le dysfonctionnement du système de pilotage 276 entraîne une baisse de la pression de fluide dans la chambre de contrebalancement 434, typiquement parce que le générateur de pression 330 n'est plus en mesure de porter le fluide de commande à la troisième pression. La pression de fluide dans ladite chambre 434 est alors insuffisante pour contrebalancer la sollicitation du dispositif de rappel 420, qui ainsi entraîne le déplacement de l'organe de support 362 vers sa position de verrouillage.

Lors de ce déplacement, la vis 376 entraîne avec elle l'écrou 378 et les rouleaux 394, lesquels ne sont plus maintenus immobiles en translation du fait de la perte d'alimentation du vérin de commande 274. Les aubes 56 pivotent donc légèrement vers les petits pas, jusqu'à ce que la surface de butée 386 de la vis 376 vienne en appui contre le butoir 291 du bâti 272, bloquant la rotation de la vis 376 autour de l'axe longitudinal X et sa translation suivant le même axe X.

Le pivotement des aubes 56 vers les petits pas est alors empêché par le dispositif de verrouillage 360.

L'étape de verrouillage non-commandé est suivie d'une étape de mise en sécurité de la soufflante 50. Lors de cette étape, le circuit de secours 334 est activé et alimente la première chambre fluidique 312 en fluide de commande de manière augmenter la pression fluidique dans cette chambre. Sous l'effet de cette augmentation de pression, le piston 310 se déplace vers sa position rétractée, entraînant avec lui la vis 376 et l'organe de support 362, qui retrouve sa position de fonctionnement. Le piston 310 n'est donc plus immobilisé et peut continuer de se déplacer vers l'aval jusqu'à ce que les aubes 56 se retrouvent en position drapeau.

On notera que ces différentes étapes peuvent être mises en œuvre indépendamment les unes des autres.

Ainsi, grâce aux exemples de réalisation décrits ci-dessus, le palier de transfert de fluide 257, 457 est rendu facilement accessible, puisque disposé en amont du réducteur, sans que cela se fasse au détriment de la longueur de la turbomachine 12, grâce au positionnement astucieux du palier de transfert de fluide 257, 457 à l'intérieur d'une cavité entourée par le vérin 74, 274. De plus, l'encombrement du palier de transfert de fluide 257, 457 lui-même est minimisé.

Ces exemples de réalisation permettent en outre de s'affranchir de l'utilisation d'un écrou de verrouillage distinct de l'écrou 178, 378 du système vis-écrou 164, 364. Il en résulte un dispositif de verrouillage 160, 360 et, de ce fait, un mécanisme de changement de pas 70 dont la fabrication est simplifiée, les coûts réduits et la fiabilité augmentée.

Par ailleurs, les exemples de réalisation des Figures 3 à 9 permettent d'alléger le mécanisme de changement de pas 70 grâce à la compacité du vérin de commande 74 et à l'utilisation d'organes de liaison 148 moins résistants et donc plus légers.

Lesdits exemples de réalisation des Figures 3 à 9 permettent également de faire l'économie d'un support disposé en amont du dispositif de verrouillage 160, ce qui facilite l'accès au mécanisme de changement de pas 70, et plus particulièrement au système de liaison 78, une fois qu'il est assemblé.

Ces exemples de réalisation des Figures 3 à 9 permettent enfin une grande précision dans le pilotage de l'angle de calage des aubes 56, ce qui autorise sur le moyeu 55 l'implantation rapprochée d'aubes 56 de grande taille et à géométrie complexe, permettant ainsi d'augmenter l'efficacité de la turbomachine 12.

## Revendications

1. Mécanisme de changement de pas (70) pour ajuster une position angulaire d'au moins une aube à calage variable (56) autour d'un axe (P) de pivotement de l'aube (56), ledit mécanisme de changement de pas (70) comprenant :
- un bâti (72, 272) fixe relativement à l'axe de pivotement (P),
- un vérin de commande (74, 274) comportant une partie fixe (100, 308) solidaire du bâti (72, 272) et une partie mobile (102, 309) mobile en translation suivant un axe longitudinal (X) relativement à la partie fixe (100, 308) entre une position rétractée et une position déployée,
- un système de liaison (78, 278) reliant la partie mobile (102, 309) à l'aube à calage variable (56) de sorte à convertir la translation de la partie mobile (102, 309) suivant l'axe longitudinal (X) en une rotation de l'aube à calage variable (56) autour de l'axe de pivotement (P), et
- un palier de transfert de fluide (257, 457) pour l'alimentation du vérin de commande (74, 274) en fluide de commande provenant d'une source (76, 276) relativement à laquelle le vérin de commande (74, 274) est mobile en rotation autour de l'axe longitudinal (X),
**caractérisé en ce que** le vérin de commande (74, 274) s'étend au moins pour partie autour du palier de transfert de fluide (257, 457).

2. Mécanisme de changement de pas (70) selon la revendication 1, dans lequel le vérin de commande (74, 274) est coaxial au palier de transfert de fluide (257, 457).

3. Mécanisme de changement de pas (70) selon la revendication 1 ou 2, dans lequel le vérin de commande (74, 274) s'étend autour de plus de la moitié, avantageusement autour de plus des trois-quarts, du palier de transfert de fluide (257, 457).

4. Mécanisme de changement de pas (70) selon l'une quelconque des revendications précédentes, comprenant un dispositif de verrouillage de pas (160) propre à bloquer la translation de la partie mobile (102) relativement à la partie fixe (100) dans au moins un sens, ledit dispositif de verrouillage de pas (160) comprenant :
- un organe de blocage (162), mobile en translation relativement au bâti (72) suivant l'axe longitudinal (X) entre une position de fonctionnement et une position de verrouillage,
- un dispositif de rappel (240) sollicitant l'organe de blocage (162) vers sa position de verrouillage, et
- un dispositif de maintien (242) pour maintenir l'organe de blocage (162) dans sa position de fonctionnement en conditions normales de fonctionnement, le dispositif de maintien (242) comprenant un vérin de contrebalancement (250) comportant une chambre de contrebalancement (254) alimentée en fluide de commande pour contrebalancer la sollicitation du dispositif de rappel (240),
le palier de transfert de fluide (257) étant configuré pour alimenter le vérin de contrebalancement (250) en fluide de commande provenant de la source (76).

5. Mécanisme de changement de pas (70) selon l'une quelconque des revendications précédentes, dans lequel le palier de transfert de fluide (257, 457) comprend un stator (258, 458) et un rotor (259, 459) mobile conjointement avec le vérin de commande (74, 274) autour de l'axe longitudinal (X) relativement au stator (258, 458), le rotor (259, 459) s'étendant autour du stator (258, 458).

6. Mécanisme de changement de pas (70) selon la revendication 5, dans lequel le palier de transfert de fluide (257, 457) comprend une pluralité de circuits (260, 261, 269, 460, 461) indépendants les uns des autres, au moins un desdits circuits (260, 261, 269, 460, 461) comprenant :
- un conduit axial (265A, 267A, 270A, 465A, 466A) ménagé dans le stator (258, 458),
- au moins un orifice radial ménagé (265B, 267B, 270B, 465B, 466B) dans le stator (258, 458) et reliant le conduit axial (265A, 267A, 270A, 465A, 466A) à la périphérie du stator (258, 458),
- une gorge circonférentielle (265C, 267C, 270C, 465C, 466C) ménagée entre le rotor (259, 459) et le stator (258, 458) et dans laquelle débouche le ou chaque orifice radial (265B, 267B, 270B, 465B, 466B), et
- au moins un conduit radial (265D, 267D, 270D, 465D, 466D), ménagé dans le rotor (259, 459), s'étendant radialement depuis la gorge (265C, 267C, 270C, 465C, 466C) jusqu'à un canal d'alimentation (266, 268, 271, 466, 468) formé dans le bâti (72, 272) ou entre le bâti (72, 272) et le palier de transfert de fluide (257, 457).

7. Mécanisme de changement de pas (70) selon la revendication 6, dans lequel les conduits axiaux (265A, 267A, 270A, 465A, 466A) des différents circuits (260, 261, 269, 460, 461) sont coaxiaux.

8. Mécanisme de changement de pas (70) selon l'une quelconque des revendications précédentes, dans lequel le vérin de commande (74, 274) comprend une première chambre fluidique (112, 312) et une deuxième chambre fluidique (114, 314) contenant chacune du fluide de commande pour commander le déplacement de la partie mobile (102, 309) relativement à la partie fixe (100, 308), et le palier de transfert de fluide (257, 457) comprend un premier circuit (260, 460) raccordé fluidiquement à la première chambre fluidique (112, 312) pour l'alimentation de ladite première chambre fluidique (112, 312) en fluide de commande fourni par la source (76, 276) et un deuxième circuit (261, 461) raccordé fluidiquement à la deuxième chambre fluidique (114, 314) pour l'alimentation de ladite deuxième chambre fluidique (114, 314) en fluide de commande fourni par la source (76, 276).

9. Rotor de soufflante (54) pour turbomachine comprenant un moyeu (55) et une pluralité d'aubes à calage variable (56) chacune pivotable relativement au moyeu (55) autour d'un axe de pivotement (P) propre, le rotor (54) comprenant en outre un mécanisme de changement de pas (70) selon l'une quelconque des revendications précédentes pour ajuster une position angulaire de chacune des aubes à calage variable (56) autour de son axe de pivotement (P) respectif.

10. Rotor de soufflante (54) selon la revendication 9, comprenant un palier de guidage (53) pour le guidage en rotation autour de l'axe longitudinal (X) dudit rotor de soufflante (54) relativement à une nacelle (20) de turbomachine, ledit palier de guidage (53) ayant un diamètre interne supérieure à un diamètre externe du palier de transfert de fluide (257, 457).

11. Rotor de soufflante (54) selon la revendication 9 ou 10, dans lequel l'axe longitudinal (X) constitue un axe de rotation du rotor de soufflante (54).

12. Turbomachine (12) comprenant un rotor de soufflante (54) selon l'une quelconque des revendications 9 à 11.

13. Aéronef (10) comprenant au moins une turbomachine (12) selon la revendication 12.

14. Procédé de changement du pas des aubes (56) d'un rotor de soufflante (54) pour turbomachine, chacune pivotable relativement à un moyeu (55) du rotor de soufflante (54) autour d'un axe de pivotement (P) propre, ledit procédé comprenant l'ajustement d'une position angulaire de chacune desdites aubes (56) autour de son axe de pivotement (P) respectif au moyen d'un mécanisme de changement de pas (70) selon l'une quelconque des revendications 1 à 8.

15. Procédé selon la revendication 14, comprenant une étape supplémentaire de verrouillage de l'orientation des aubes (56) au moyen du dispositif de verrouillage de pas (160).

## Patentansprüche

1. Mechanismus (70) zum Ändern der Blattverstellung zum Anpassen einer Winkelposition mindestens einer Schaufel mit variabler Anstellung (56) um eine Schwenkachse (P) der Schaufel (56) herum, wobei der Mechanismus (70) zum Ändern der Blattverstellung umfasst:
- ein Gestell (72, 272), das im Verhältnis zur Schwenkachse (P) feststeht,
- einen Steuerzylinder (74, 274), der einen festen Teil (100, 308), der mit dem Gestell (72, 272) fest verbunden ist, und einen beweglichen Teil (102, 309), der gemäß einer Längsachse (X) im Verhältnis zu dem festen Teil (100, 308) zwischen einer zurückgezogenen Position und einer entfalteten Position translationsmäßig beweglich ist, umfasst,
- ein Verbindungssystem (78, 278), das den beweglichen Teil (102, 309) mit der Schaufel mit variabler Anstellung (56) derart verbindet, dass die Translation des beweglichen Teils (102, 309) gemäß der Längsachse (X) in eine Drehung der Schaufel mit variabler Anstellung (56) um die Schwenkachse (P) herum umgewandelt wird, und
- ein Fluidtransferlager (257, 457) zur Versorgung des Steuerzylinders (74, 274) mit Steuerfluid aus einer Quelle (76, 276), im Verhältnis zu welcher der Steuerzylinder (74, 274) um die Längsachse (X) herum drehbeweglich ist,
**dadurch gekennzeichnet, dass** sich der Steuerzylinder (74, 274) mindestens teilweise um das Fluidtransferlager (257, 457) herum erstreckt.

2. Mechanismus (70) zum Ändern der Blattverstellung nach Anspruch 1, wobei der Steuerzylinder (74, 274) zu dem Fluidtransferlager (257, 457) koaxial ist.

3. Mechanismus (70) zum Ändern der Blattverstellung nach Anspruch 1 oder 2, wobei sich der Steuerzylinder (74, 274) um mehr als die Hälfte, vorteilhaft um mehr als Dreiviertel, des Fluidtransferlagers (257, 457) herum erstreckt.

4. Mechanismus (70) zum Ändern der Blattverstellung nach einem der vorhergehenden Ansprüche, umfassend eine Vorrichtung (160) zum Sperren der Blattverstellung, die dazu geeignet ist, die Translation des beweglichen Teils (102) im Verhältnis zu dem festen Teil (100) in mindestens einer Richtung zu blockieren, wobei die Vorrichtung (160) zum Sperren der Blattverstellung umfasst:
- ein Blockierorgan (162), das im Verhältnis zu dem Gestell (72) gemäß der Längsachse (X) zwischen einer Betriebsposition und einer Sperrposition translationsmäßig beweglich ist,
- eine Rückstellvorrichtung (240), die das Blockierorgan (162) in seine Sperrposition vorspannt, und
- eine Haltevorrichtung (242), um das Blockierorgan (162) unter normalen Betriebsbedingungen in seiner Betriebsfunktion zu halten, wobei die Haltevorrichtung (242) einen Ausgleichzylinder (250) umfasst, der eine Ausgleichkammer (254) umfasst, die mit einem Steuerfluid versorgt wird, um die Vorspannung der Rückstellvorrichtung (240) auszugleichen,
wobei das Fluidtransferlager (257) dazu konfiguriert ist, den Ausgleichzylinder (250) mit Steuerfluid aus der Quelle (76) zu versorgen.

5. Mechanismus (70) zum Ändern der Blattverstellung nach einem der vorhergehenden Ansprüche, wobei das Fluidtransferlager (257, 457) einen Stator (258, 458) und einen Rotor (259, 459), der zusammen mit dem Steuerzylinder (74, 274) um die Schwenkachse (X) herum im Verhältnis zum Stator (258, 458) beweglich ist, umfasst, wobei sich der Rotor (259, 459) um den Stator (258, 458) herum erstreckt.

6. Mechanismus (70) zum Ändern der Blattverstellung nach Anspruch 5, wobei das Fluidtransferlager (257, 457) eine Vielzahl von Kreisläufen (260, 261, 269, 460, 461) umfasst, die voneinander unabhängig sind, wobei mindestens einer der Kreisläufe (260, 261, 269, 460, 461) umfasst:
- eine axiale Leitung (265A, 267A, 270A, 465A, 466A), die in dem Stator (258, 458) eingerichtet ist,
- mindestens eine radiale Mündung (265B, 267B, 270B, 465B, 466B), die in dem Stator (258, 458) eingerichtet ist und die axiale Leitung (265A, 267A, 270A, 465A, 466A) mit der Peripherie des Stators (258, 458) verbindet,
- eine Umfangsauskehlung (265C, 267C, 270C, 465C, 466C), die zwischen dem Rotor (259, 459) und dem Stator (258, 458) eingerichtet ist, und in welche die oder jede radiale Mündung (265B, 267B, 270B, 465B, 466B) einmündet, und
- mindestens eine radiale Leitung (265D, 267D, 270D, 465D, 466D), die in dem Rotor (259, 459) eingerichtet ist und sich von der Auskehlung (265C, 267C, 270C, 465C, 466C) aus bis zu einem Versorgungskanal (266, 268, 271, 466, 468), der in dem Gestell (72, 272) oder zwischen dem Gestell (72, 272) und dem Fluidtransferlager (257, 457) gebildet ist, radial erstreckt.

7. Mechanismus (70) zum Ändern der Blattverstellung nach Anspruch 6, wobei die axialen Leitungen (265A, 267A, 270A, 465A, 466A) der verschiedenen Kreisläufe (260, 261, 269, 460, 461) koaxial sind.

8. Mechanismus (70) zum Ändern der Blattverstellung nach einem der vorhergehenden Ansprüche, wobei der Steuerzylinder (74, 274) eine erste Fluidkammer (112, 312) und eine zweite Fluidkammer (114, 314) umfasst, die jeweils Steuerfluid enthalten, um die Verlagerung des beweglichen Teils (102, 309) im Verhältnis zu dem festen Teil (100, 308) zu steuern, und das Fluidtransferlager (257, 457) einen ersten Kreislauf (260, 460), der fluidisch an die erste Fluidkammer (112, 312) angeschlossen ist, um die erste Fluidkammer (112, 312) mit Steuerfluid, das von der Quelle (76, 276) bereitgestellt wird, zu versorgen, und einen zweiten Kreislauf (261, 461), der fluidisch an die zweite Fluidkammer (114, 314) angeschlossen ist, um die zweite Fluidkammer (114, 314) mit Steuerfluid, das von der Quelle (76, 276) bereitgestellt wird, zu versorgen, umfasst.

9. Gebläserotor (54) für eine Turbomaschine, umfassend eine Nabe (55) und eine Vielzahl von Schaufeln mit variabler Anstellung (56), die jeweils im Verhältnis zu der Nabe (55) um eine eigene Schwenkachse (P) herum schwenkbar sind, wobei der Rotor (54) außerdem einen Mechanismus (70) zum Ändern der Blattverstellung nach einem der vorhergehenden Ansprüche umfasst, um eine Winkelposition jeder der Schaufeln mit variabler Anstellung (56) um ihre jeweilige Schwenkachse (P) herum anzupassen.

10. Gebläserotor (54) nach Anspruch 9, umfassend ein Führungslager (53) für die Drehführung um die Längsachse (X) des Gebläserotors (54) herum im Verhältnis zu einer Turbomaschinengondel (20), wobei das Führungslager (53) einen Innendurchmesser aufweist, der größer als ein Außendurchmesser des Fluidtransferlagers (257, 457) ist.

11. Gebläserotor (54) nach Anspruch 9 oder 10, wobei die Längsachse (X) eine Drehachse des Gebläserotors (54) ist.

12. Turbomaschine (12), umfassend einen Gebläserotor (54) nach einem der Ansprüche 9 bis 11.

13. Luftfahrzeug (10), umfassend mindestens eine Turbomaschine (12) nach Anspruch 12.

14. Verfahren zum Ändern der Blattverstellung der Schaufeln (56) eines Gebläserotors (54) für eine Turbomaschine, die jeweils im Verhältnis zu einer Nabe (55) des Gebläserotors (54) um eine eigene Schwenkachse (P) herum schwenkbar sind, wobei das Verfahren das Anpassen einer Winkelposition jeder der Schaufeln (56) um ihre jeweilige Schwenkachse (P) herum anhand eines Mechanismus (70) zum Ändern der Blattverstellung nach einem der Ansprüche 1 à 8 umfasst.

15. Verfahren nach Anspruch 14, umfassend einen zusätzlichen Schritt des Sperrens der Orientierung der Schaufeln (56) anhand der Vorrichtung (160) zum Sperren der Blattverstellung.

## Claims

1. A pitch change mechanism (70) for adjusting an angular position of at least one variable-setting blade (56) around a pivot axis (P) of the blade (56), said pitch change mechanism (70) comprising:
- a frame (72, 272) which is fixed in relation to the pivot axis (P),
- a control actuator (74, 274) including a fixed part (100, 308) secured to the frame (72, 272) and a movable part (102, 309), translationally movable along a longitudinal axis (X) in relation to the fixed part (100, 308) between a retracted position and an extended position,
- a linking system (78, 278) linking the movable part (102, 309) to the variable-setting blade (56) so as to convert the translation of the movable part (102, 309) along the longitudinal axis (X) into a rotation of the variable-setting blade (56) about the pivot axis (P), and
- a fluid transfer bearing (257, 457) for supplying the control actuator (74, 274) with actuating fluid coming from a source (76, 276) in relation to which the control actuator (74, 274) is rotationally movable about the longitudinal axis (X),
**characterized in that** the control actuator (74, 274) extends at least partially around the fluid transfer bearing (257, 457).

2. The pitch change mechanism (70) as claimed in claim 1, wherein the control actuator (74, 274) is coaxial with the fluid transfer bearing (257, 457).

3. The pitch change mechanism (70) as claimed in claim 1 or 2, wherein the control actuator (74, 274) extends around more than half, advantageously around more than three quarters, of the fluid transfer bearing (257, 457).

4. The pitch change mechanism (70) as claimed in any of the preceding claims, comprising a pitch locking device (160) suitable for locking the translation of the movable part (102) in relation to the fixed part (100) in at least one direction, said pitch locking device (160) comprising:
- a locking member (162), translationally movable in relation to the frame (72) along the longitudinal axis (X) between an operating position and a locking position,
- a biasing device (240) biasing the locking member (162) towards its locking position, and
- a retaining device (242) for retaining the locking member (162) in its operating position under normal operating conditions, the retaining device (242) comprising a counterbalance actuator (250) including a counterbalance chamber (254) supplied with actuating fluid to counterbalance the biasing of the biasing device (240),
the fluid transfer bearing (257) being configured to supply the counterbalance actuator (250) with actuating fluid coming from the source (76).

5. The pitch change mechanism (70) as claimed in any of the preceding claims, wherein the fluid transfer bearing (257, 457) comprises a stator (258, 458) and a rotor (259, 459) jointly movable with the control actuator (74, 274) about the longitudinal axis (X) in relation to the stator (258, 458), the rotor (259, 459) extending around the stator (258, 458).

6. The pitch change mechanism (70) as claimed in claim 5, wherein the fluid transfer bearing (257, 457) comprises a plurality of circuits (260, 261, 269, 460, 461) independent from one another, at least one of said circuits (260, 261, 269, 460, 461) comprising:
- an axial duct (265A, 267A, 270A, 465A, 466A) fashioned in the stator (258, 458),
- at least one radial orifice (265B, 267B, 270B, 465B, 466B) fashioned in the stator (258, 458) and linking the axial duct (265A, 267A, 270A, 465A, 466A) to the periphery of the stator (258, 458),
- a circumferential groove (265C, 267C, 270C, 465C, 466C) fashioned between the rotor (259, 459) and the stator (258, 458) and into which the or each radial orifice (265B, 267B, 270B, 465B, 466B) opens, and
- at least one radial duct (265D, 267D, 270D, 465D, 466D), fashioned in the rotor (259, 459), extending radially from the groove (265C, 267C, 270C, 465C, 466C) all the way to a supply channel (266, 268, 271, 466, 468) formed in the frame (72, 272) or between the frame (72, 272) and the fluid transfer bearing (257, 457).

7. The pitch change mechanism (70) as claimed in claim 6, wherein the axial ducts (265A, 267A, 270A, 465A, 466A) of the different circuits (260, 261, 269, 460, 461) are coaxial.

8. The pitch change mechanism (70) as claimed in any of the preceding claims, wherein the control actuator (74, 274) comprises a first fluid chamber (112, 312) and a second fluid chamber (114, 314) each containing actuating fluid for actuating the displacement of the movable part (102, 309) in relation to the fixed part (100, 308), and the fluid transfer bearing (257, 457) comprises a first circuit (260, 460) fluidly connected to the first fluid chamber (112, 312) for supplying said first fluid chamber (112, 312) with actuating fluid provided by the source (76, 276) and a second circuit (261, 461) fluidly connected to the second fluid chamber (114, 314) for supplying said second fluid chamber (114, 314) with actuating fluid provided by the source (76, 276).

9. A fan rotor (54) for a turbomachine comprising a hub (55) and a plurality of variable-setting blades (56) each pivotable in relation to the hub (55) about a respective pivot axis (P), the rotor (54) further comprising a pitch change mechanism (70) as claimed in any of the preceding claims for adjusting an angular position of each of the variable-setting blades (56) around its respective pivot axis (P).

10. The fan rotor (54) as claimed in claim 9, comprising a guide bearing (53) for rotationally guiding, about the longitudinal axis (X), said fan rotor (54) in relation to a turbomachine nacelle (20), said guide bearing (53) having an inner diameter greater than an outer diameter of the fluid transfer bearing (257, 457).

11. The fan rotor (54) as claimed in claim 9 or 10, wherein the longitudinal axis (X) constitutes an axis of rotation of the fan rotor (54).

12. A turbomachine (12) comprising a fan rotor (54) as claimed in any of claims 9 to 11.

13. An aircraft (10) comprising at least one turbomachine (12) as claimed in claim 12.

14. A method for changing the pitch of the blades (56) of a fan rotor (54) for a turbomachine, each one pivotable in relation to a hub (55) of the fan rotor (54) about respective a pivot axis (P), said method comprising adjusting an angular position of each of said blades (56) around its respective pivot axis (P) by means of a pitch change mechanism (70) as claimed in any of claims 1 to 8.

15. The method as claimed in claim 14, comprising an additional step of locking the orientation of the blades (56) by means of the pitch locking device (160).
